(19) Europäisches Patentamt European Patent Office Office européen des brevets

(11) **EP 4 254 319 A1**

(12) **EUROPEAN PATENT APPLICATION**
published in accordance with Art. 153(4) EPC

(43) Date of publication:
**04.10.2023  Bulletin 2023/40**

(21) Application number: **20967239.3**

(22) Date of filing: **28.12.2020**

(51) International Patent Classification (IPC):
**G06T 5/00** (2006.01)    **G06T 15/50** (2011.01)

(52) Cooperative Patent Classification (CPC):
**G06T 15/506; G06T 5/00; G06T 15/50;**
**G06T 19/20;** G06T 2210/24; G06T 2219/2012

(86) International application number:
**PCT/CN2020/139883**

(87) International publication number:
**WO 2022/140887 (07.07.2022 Gazette 2022/27)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Huawei Technologies Co., Ltd.**
**Shenzhen, Guangdong 518129 (CN)**

(72) Inventors:
• **YUSUKE, Takimoto**
  **Shenzhen, Guangdong 518129 (CN)**
• **TAKEHIRO, Tawara**
  **Shenzhen, Guangdong 518129 (CN)**

(74) Representative: **Pfenning, Meinig & Partner mbB**
**Patent- und Rechtsanwälte**
**Theresienhöhe 11a**
**80339 München (DE)**

(54) **IMAGE PROCESSING METHOD AND APPARATUS**

(57)    Embodiments of this application disclose an image processing method and apparatus, and relate to the field of image processing, and in particular, to an image processing method and apparatus, which can reflect an intention of a user in a relighting process, so that user experience is improved. A specific solution is: obtaining a first image and a first explicit lighting parameter, where the first explicit lighting parameter is a lighting parameter configured by a user; processing the first image by using a first relighting algorithm to obtain a second image, where the first relighting algorithm is used to calculate a second pixel value of each pixel in the first image based on the first explicit lighting parameter and a first pixel value of each pixel, and the second image is formed by the second pixel value of each pixel; and determining a target image based on the second image.

EP 4 254 319 A1

A first device obtains a first image and a first explicit lighting parameter — S701

The first device processes the first image according to a first relighting algorithm to obtain a second image — S702

The first device determines a target image based on the second image — S703

FIG. 7

**Description**

**TECHNICAL FIELD**

Embodiments of this application relate to the field of computers, and in particular, to an image processing method and apparatus.

**BACKGROUND**

With continuous development of photographing technologies and image processing technologies, a user has an increasingly high requirement on an image effect (for example, a lighting effect). Generally, during photographing, due to uncontrollability of ambient light, lighting during photographing may not satisfy a requirement. For example, in a lighting condition such as a cloudy day, an image that satisfies a lighting requirement may fail to be photographed. Therefore, after photographing, lighting of the image usually needs to be readjusted, and a process of readjusting the lighting of the image is referred to as relighting.

A principle of a relighting method mainly includes: obtaining an end-to-end encoder network by pre-training a large number of images; when lighting of an original image needs to be adjusted, inputting the original image into the end-to-end encoder network, running the network, and adjusting the lighting of the original image; and outputting a relighted image.

In a relighting process, the end-to-end encoder network is pre-trained, and the process does not require participation of a user. As a result, an intention of the user cannot be reflected.

**SUMMARY**

Embodiments of this application provide an image processing method and apparatus, which can reflect an intention of a user in a relighting process, so that user experience is improved.

To achieve the foregoing objective, this application uses the following technical solutions.

According to a first aspect, an image processing method is provided. The method may be applied to a first device. The method may include: obtaining a first image and a first explicit lighting parameter, where the first explicit lighting parameter is a lighting parameter configured by a user; processing the first image according to a first relighting algorithm to obtain a second image, where the first relighting algorithm is used to calculate a second pixel value of each pixel in the first image based on the first explicit lighting parameter and a first pixel value of each pixel, and the second image is formed by the second pixel value of each pixel; and determining a target image based on the second image.

According to the image processing method provided in this application, in a relighting process, an explicit lighting parameter configured by a user is first obtained, and then a target image is obtained based on the explicit lighting parameter configured by the user and an original image according to a relighting algorithm. In this way, because the relighting algorithm may obtain a pixel value of a processed image through calculation according to the explicit lighting parameter configured by the user and a pixel value of the original image to form the processed image, and then determine the target image based on the processed image. Clearly, in the relighting process, the lighting parameter needs to be configured by the user. Therefore, an intention of the user can be reflected, so that user experience is improved.

With reference to the first aspect, in a possible implementation, the method may further include: inputting the second image into a discriminator to obtain a lighting quality value of the second image, where the discriminator is a pre-trained neural network or linear network used to calculate a lighting quality value of an image inputted into the discriminator; and determining whether the lighting quality value of the second image is greater than or equal to a lighting quality threshold; and the determining a target image based on the second image may include: if the lighting quality value of the second image is greater than or equal to the lighting quality threshold, determining that the target image is the second image. In the possible implementation, the second image whose lighting quality value is greater than or equal to the lighting quality threshold is used as the target image, so that a lighting effect of a relighted image is improved.

With reference to the first aspect or the foregoing possible implementation, in another possible implementation, the method may further include: if the lighting quality value of the second image is less than the lighting quality threshold, adjusting one or more lighting parameters in the first relighting algorithm at a first rate according to an optimization algorithm to obtain a first adjustment lighting parameter; processing the first image according to a second relighting algorithm to obtain a third image, where a lighting parameter in the second relighting algorithm is the first adjustment lighting parameter; inputting the third image into the discriminator to acquire a lighting quality value of the third image; and if the lighting quality value of the third image is greater than or equal to the lighting quality threshold, determining that the target image is the third image, where when the first rate is smaller, a second explicit lighting parameter converges more to the first explicit lighting parameter, and the second explicit lighting parameter is an explicit lighting parameter included in the first adjustment lighting parameter.

In the possible implementation, one or more lighting parameters in the relighting algorithm may be adjusted according to the optimization algorithm to obtain a target image that satisfies a lighting threshold requirement. Further, an optimization rate of the optimization algorithm is adjustable, and a degree of impact of an intention of a user on an image processing process can be changed by adjusting the optimization rate of the optimization algorithm. For example, when a lighting parameter of the first image is adjusted at the first rate according to the optimization algorithm, if the first rate is smaller, the second explicit lighting parameter included in the adjusted lighting parameter converges more to the first explicit lighting parameter configured by the user. Correspondingly, a degree of reflecting the intention of the user is higher.

With reference to the first aspect or any one of the foregoing possible implementations, in another possible implementation, the relighting algorithm includes a differentiable function, and the differentiable function is used to represent a relationship between a pixel value of an image and a lighting parameter. In the possible implementation, because a function forming the relighting algorithm is differentiable, a gradient value of the lighting quality value of the image may be reversely transferred to the relighting algorithm by using a chain method and the optimization algorithm to obtain a gradient value of the lighting parameter, and the lighting parameter is adjusted based on the gradient value of the lighting parameter, so that reverse adjustment of the lighting parameter is implemented.

With reference to the first aspect or any one of the foregoing possible implementations, in another possible implementation, the first explicit lighting parameter may include one or more of the following: a light source position and a light source intensity. In the possible implementation, specific content of the first explicit lighting parameter may be configured according to an actual requirement, so that an application scope is wide and flexibility is high.

With reference to the first aspect or any one of the foregoing possible implementations, in another possible implementation, the obtaining a first image and a first explicit lighting parameter may include: receiving the first image and the first explicit lighting parameter that are sent by a second device, where the second device is a device that communicates with the first device. In the possible implementation, the second device may first obtain the first image and the first explicit lighting parameter, and then the second device sends the first image and the first explicit lighting parameter to the first device. In this way, user experience can be further improved. For example, when the second device is a smartwatch, the first image and the first explicit lighting parameter may be obtained based on an operation performed by the user on the smartwatch, and are transmitted to the second device. When the user is far away from the second device, the user no longer needs to reach the first device to obtain the first image and the first explicit lighting parameter based on a related operation performed by the user on the first device, so that user experience is improved.

With reference to the first aspect or any one of the foregoing possible implementations, in another possible implementation, the first explicit lighting parameter includes the light source position, and the obtaining a first image and a first explicit lighting parameter may include: displaying the first image on a display interface of the first device; receiving a first operation on the first image, where the first operation may include one or more of the following: swiping, tapping, dragging, and inputting; and obtaining the light source position in response to the first operation. In the possible implementation, the light source position may be obtained based on an operation performed by the user on the display interface of the first device, and interaction between the user and the first device is simple and convenient.

With reference to the first aspect or any one of the foregoing possible implementations, in another possible implementation, the method may further include: displaying, on the display interface of the first device, an image obtained after the first image is processed based on the light source position. In the possible implementation, when the light source position changes, the display interface of the first device may display a lighting effect of the image when the light source position changes, so that user experience can be further improved.

With reference to the first aspect or any one of the foregoing possible implementations, in another possible implementation, the method may further include: sending, to the second device, the image obtained after the first image is processed based on the light source position, to indicate the second device to display the image obtained after the first image is processed based on the light source position. In the possible implementation, when the light source position changes, if the user is close to the second device, the second device displays the image obtained after the first image is processed based on the light source position, which is simple and convenient and can further improve user experience.

With reference to the first aspect or any one of the foregoing possible implementations, in another possible implementation, the first explicit lighting parameter includes the light source intensity, and the obtaining a first image and a first explicit lighting parameter may include: displaying the first image on a display interface of the first device; receiving a second operation on the first image, where the second operation may include one or more of the following: swiping, tapping, dragging, and inputting; and obtaining the light source intensity in response to the second operation. In the possible implementation, the light source intensity may be obtained based on an operation performed by the user on the display interface of the first device, and interaction between the user and the first device is simple and convenient.

With reference to the first aspect or any one of the foregoing possible implementations, in another possible implementation, the method may further include: displaying, on the display interface of the first device, an image obtained after the first image is processed based on the light source intensity. In the possible implementation, when the light source intensity changes, the display interface of the first device may display a lighting effect of the image when the light source intensity changes, so that user experience can be further improved.

With reference to the first aspect or any one of the foregoing possible implementations, in another possible implementation, the method may further include: sending, to the second device, the image obtained after the first image is processed based on the light source intensity, to indicate the second device to display the image obtained after the first image is processed based on the light source intensity. In the possible implementation, when the light source intensity changes, if the user is close to the second device, the second device displays the image obtained after the first image is processed based on the light source intensity, which is simple and convenient and can further improve user experience.

With reference to the first aspect or any one of the foregoing possible implementations, in another possible implementation, the processing the first image according to a first relighting algorithm to obtain a second image may include: calculating a third pixel value of each pixel based on the first explicit lighting parameter and the first pixel value of each pixel in the first image according to a three-dimensional image drawing algorithm; and calculating the second pixel value of each pixel based on the third pixel value of each pixel and the first pixel value of each pixel according to an image modification algorithm to obtain the second image, where the three-dimensional image drawing algorithm may include a Lambert+Phong function or a physically-based rendering function; and the image modification algorithm may include a linear burn blend function or a soft light blend function. In the possible implementation, a specific function included in the relighting algorithm may be configured according to an actual requirement, to adapt to different application scenarios.

With reference to the first aspect or any one of the foregoing possible implementations, in another possible implementation, the method may further include: displaying the target image on the display interface of the first device; or sending the target image to the second device, to indicate the second device to display the target image. In the possible implementation, an appropriate solution for displaying the target image may be selected according to an actual requirement, so that user experience is further improved.

It may be understood that the target image may be displayed on both the display interface of the first device and a display interface of the second device. This is not specifically limited in this application.

With reference to the first aspect or any one of the foregoing possible implementations, in another possible implementation, the method may further include: determining that the user configures explicit lighting parameters a plurality of times, where a difference between explicit lighting parameters configured every two times in the plurality of times of configuration is less than or equal to a parameter difference threshold; and adjusting one or more lighting parameters in the first relighting algorithm at a second rate according to the optimization algorithm to obtain a second adjustment lighting parameter, where the second rate is less than the first rate. In the possible implementation, when the user configures first explicit lighting parameters a plurality of times and a difference between first explicit lighting parameters configured every two times in the plurality of times of configuration is less than or equal to the parameter difference threshold, it may be understood that the user is not satisfied with a display lighting parameter adjusted according to the optimization algorithm. In this way, the optimization rate of the optimization algorithm can be reduced, so that the adjusted lighting parameter can converge to the display lighting parameter configured by the user.

With reference to the first aspect or any one of the foregoing possible implementations, in another possible implementation, the first image includes one or more faces, and the method may further include: obtaining a three-dimensional shape of the one or more faces in the first image; and the processing the first image according to a first relighting algorithm to obtain a second image may include: calculating the second pixel value of each pixel according to the first relighting algorithm and based on the first explicit lighting parameter, the three-dimensional shape of the one or more faces, and the first pixel value of each pixel in the first image to obtain the second image. In the possible implementation, when the image includes a face, a lighting effect of the image can be further improved by using this solution.

According to a second aspect, this application provides an image processing apparatus. The apparatus may be deployed on a first device. The apparatus may include a first obtaining unit, a processing unit, and a first determining unit.

The first obtaining unit is configured to obtain a first image and a first explicit lighting parameter, where the first explicit lighting parameter is a lighting parameter configured by a user.

The processing unit is configured to process the first image according to a first relighting algorithm to obtain a second image, where the first relighting algorithm is used to calculate a second pixel value of each pixel in the first image based on the first explicit lighting parameter and a first pixel value of each pixel, and the second image is formed by the second pixel value of each pixel.

The first determining unit is configured to determine a target image based on the second image.

It should be noted that the image processing apparatus provided in the second aspect may include corresponding units that perform the method in any one of the first aspect or the possible implementations of the first aspect. For specific implementations of the functional units, refer to the specific implementations of the first aspect. Details are not described herein again.

According to a third aspect, an embodiment of this application provides an electronic device. The device may include a processor, configured to implement the image processing method described in the first aspect. The device may further include a memory. The memory is coupled to the processor. When executing a computer program stored in the memory, the processor may implement the image processing method described in the first aspect.

The apparatus may further include a communication interface. The communication interface is used by the apparatus to communicate with another device. For example, the communication interface may be a transceiver, a circuit, a bus, a module, or another type of communication interface. In a possible implementation, the device may include:

the memory, configured to store the computer program; and

the processor, configured to: obtain a first image and a first explicit lighting parameter, where the first explicit lighting parameter is a lighting parameter configured by a user; process the first image according to a first relighting algorithm to obtain a second image, where the first relighting algorithm is used to calculate a second pixel value of each pixel in the first image based on the first explicit lighting parameter and a first pixel value of each pixel, and the second image is formed by the second pixel value of each pixel; and determine a target image based on the second image.

In a specific implementation process, the processor may be a processor specially configured to perform the methods, or may be a processor, for example, a general purpose processor, that executes computer instructions in a memory to perform the methods. The memory may be a non-transitory (non-transitory) memory such as a read-only memory (Read Only Memory, ROM). The memory and the processor may be integrated on a same chip, or may be separately disposed on different chips. A type of the memory and a manner in which the memory and the processor are disposed are not limited in embodiments of the present invention. It should be noted that the instructions in the memory in this application may be pre-stored, or may be downloaded from the internet and then stored when the apparatus is used. Sources of the instructions in the memory are not specifically limited in this application. The coupling in embodiments of this application is indirect coupling or connection between apparatuses, units, or modules for information exchange between the apparatuses, the units, or the modules, and may be in electrical, mechanical, or other forms. Optionally, the memory may be located outside a communication apparatus or located inside a communication apparatus.

According to a fourth aspect, a computer-readable storage medium is provided, for example, a non-transient computer-readable storage medium. A computer program (or instructions) is stored on the computer-readable storage medium. When the computer program (or instructions) is run on a computer, the computer is enabled to perform any image processing method provided in any possible implementation of the first aspect.

According to a sixth aspect, a computer program product is provided. When the computer program product is run on a computer, any method according to any one of the first aspect or the possible implementations of the first aspect is performed.

According to a sixth aspect, an embodiment of this application provides a chip system. The chip system includes a processor and an interface, configured to support an electronic device in implementing the function in any one of the first aspect or the possible implementations of the first aspect. In a possible design, the chip system may further include a memory. The memory is configured to store program instructions and data that are necessary for the network device. The chip system may include a chip, or include a chip and another discrete device.

It may be understood that any image processing apparatus, computer storage medium, computer program product, chip system, or the like provided above may be applied to the corresponding image processing methods provided above. Therefore, for beneficial effect that can be achieved by any imaging processing apparatus, computer storage medium, computer program product, chip system, or the like, refer to the beneficial effects in the corresponding methods. Details are not described herein again.

In this application, a name of the image processing apparatus or each functional module does not constitute a limitation on devices or functional modules. During actual implementation, these devices or functional modules may have other names. Each device or functional module falls within the scope defined by the claims and their equivalent technologies in this application, provided that a function of the device or functional module is similar to that described in this application.

**BRIEF DESCRIPTION OF DRAWINGS**

FIG. 1 is a schematic diagram of comparison of lighting effects according to an embodiment of this application;
FIG. 2 is a schematic diagram of a photographing scenario according to an embodiment of this application;
FIG. 3A is a schematic diagram of another photographing scenario according to an embodiment of this application;
FIG. 3B is a schematic diagram of still another photographing scenario according to an embodiment of this application;
FIG. 4 is a schematic diagram of a structure of an electronic device according to an embodiment of this application;
FIG. 5 is a schematic diagram of a structure of another electronic device according to an embodiment of this application;

FIG. 6 is a schematic diagram of a software structure of an electronic device according to an embodiment of this application;

FIG. 7 is a flowchart of an image processing method according to an embodiment of this application;

FIG. 8 is a schematic flowchart of another image processing method according to an embodiment of this application;

FIG. 9 is a schematic diagram of another image processing process according to an embodiment of this application;

FIG. 10 is a schematic diagram of a structure of an image processing apparatus according to an embodiment of this application;

FIG. 11 is a schematic diagram of a structure of another image processing apparatus according to an embodiment of this application; and

FIG. 12 is a schematic diagram of a structure of an electronic device according to an embodiment of this application.

## DESCRIPTION OF EMBODIMENTS

In this specification, the claims, and the accompanying drawings of this application, the terms "first", "second", "third", and the like are intended to distinguish between different objects but do not limit a particular order.

In embodiments of this application, the term "example", "for example", or the like is used to represent giving an example, an illustration, or a description. Any embodiment or design scheme described as an "example" or "for example" in embodiments of this application should not be explained as being more preferred or having more advantages than another embodiment or design scheme. Exactly, use of the term such as "example" or "for example" is intended to present a relative concept in a specific manner for ease of understanding.

Unless otherwise specified, "/" in the descriptions of embodiments of this application represents an "or" relationship between associated objects. For example, A/B may represent A or B. In this application, "and/or" describes only an association relationship for describing associated objects and represents that three relationships may exist. For example, A and/or B may represent the following three cases: Only A exists, both A and B exist, and only B exists. A and B may be singular or plural. In addition, in the descriptions of this application, "a plurality of" means two or more than two. At least one of the following items (pieces) or a similar expression thereof refers to any combination of these items, including any combination of singular items (pieces) or plural items (pieces). For example, at least one of a, b, or c may represent: a, b, c, a and b, a and c, b and c, or a, b, and c, where a, b, and c each may be singular or plural.

In embodiments of this application, "at least one" may also be described as "one or more", and "a plurality of" may be "two, three, four, or more". This is not limited in this application.

For ease of understanding, technical terms in this application are explained first.

A lighting parameter may refer to a related parameter in a process of adjusting lighting of an image. When lighting of an image is adjusted by using different methods, corresponding lighting parameters may be different. For example, the lighting parameter may include a light source position, a light source intensity, shadow roughness, tone mapping, and the like.

The explicit lighting parameter may refer to a lighting parameter configured by a user in a process of adjusting lighting of an image. For example, the explicit lighting parameter may be a lighting parameter inputted by the user; or the explicit lighting parameter is a lighting parameter obtained according to an input of the user.

A lighting quality value may be a value used to indicate a lighting effect of an image. That is, when the lighting effect of the image is better, the lighting quality value of the image is larger.

For ease of understanding, the lighting effect is briefly described.

The image with a good lighting effect may be an image that conforms to a traditional aesthetic rule. For example, an image with a good lighting effect may be an image whose lighting conforms to a Rembrandt light distribution or a butterfly light distribution. An image with a non-good lighting effect may be an image that breaks a traditional aesthetic rule, for example, an image with overexposure, strange shadows, or strange skin tones.

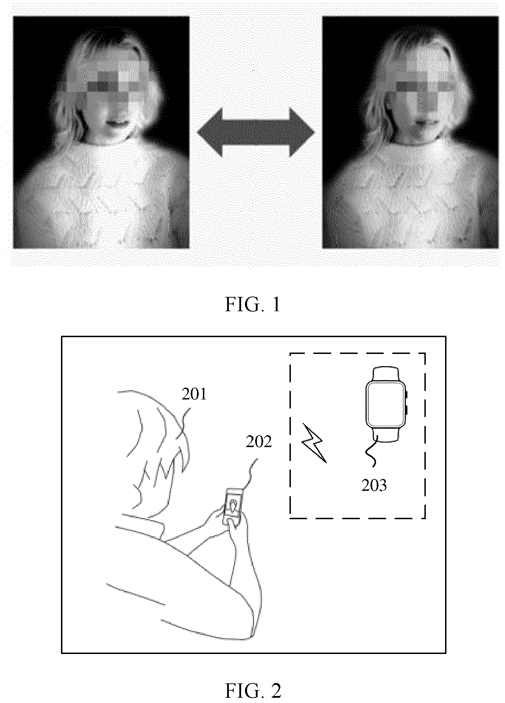

FIG. 1 shows an example of comparison of lighting effects. As shown in FIG. 1, lighting of the image on the right conforms to a Rembrandt light distribution. The lighting in the image is natural and conforms to a traditional aesthetic rule. The image has a good lighting effect. The face of the person in the left image is illuminated by a light source below the person. The lighting in the image is strange and is an image with a non-good lighting effect.

Whether a lighting effect of an image is good may be determined according to a discrimination result of professional personnel or may be determined according to a discrimination result of a machine.

In embodiments of this application, a lighting effect of an image may be measured by using a lighting quality value of the image. That is, an image whose lighting quality value is greater than or equal to a lighting quality threshold may be considered as an image with a good lighting effect, and an image whose lighting quality value is less than the lighting quality threshold may be considered as an image with a non-good lighting effect.

As mentioned above, current relighting methods cannot reflect an intention of a user. Based on this, embodiments of in this application provide an image processing method in a relighting process. An explicit lighting parameter configured by a user is first obtained, and then a target image is obtained based on the explicit lighting parameter configured by the user and an original image according to a relighting algorithm. In this way, because the relighting algorithm may obtain a pixel value of a processed image through calculation according to the explicit lighting parameter configured by the user and a pixel value of the original image to form the processed image, and then determine the target image based on the processed image. Clearly, in the relighting process, the lighting parameter needs to be configured by the user. Therefore, an intention of the user can be reflected, so that user experience is improved.

The implementations of embodiments of this application are described below in detail with reference to the accompanying drawings.

An application scenario of embodiments of this application is first described.

An image processing method provided in embodiments of this application may be applied to a selfie scenario, a non-selfie scenario, a scenario of image processing after photographing, or another scenario related to image processing.

Specifically, as shown in FIG. 2, the scenario may include a user 201 and an electronic device 202.

The user 201 may be configured to interact with the electronic device 202. For example, the user 201 may be configured to interact with the electronic device 202 to configure an explicit lighting parameter.

The electronic device 202 may be configured to interact with the user 201. The electronic device 202 may be further configured to process an image. For example, the electronic device 202 may be configured to interact with the user 201 to obtain the explicit lighting parameter configured by the user. In another example, the electronic device 202 may be configured to relight an image by using the image processing method provided in embodiments of this application.

The electronic device 202 may be a device having an image processing capability, for example, a server or a terminal. For example, the electronic device 202 may be a smartphone, a tablet computer, a wearable device, or an AR/VR device, or may be a personal computer (personal computer, PC), a personal digital assistant (personal digital assistant, PDA), a netbook, or the like. A specific form of the electronic device is not limited in embodiments of this application. The wearable device may also be referred to as a wearable intelligent device, and is a general term for wearable devices, such as glasses, gloves, watches, clothes, and shoes, that are developed by applying wearable technologies to intelligent designs of daily wear. The wearable device is a portable device that is directly worn on a body or integrated into clothes or an accessory of a user. The wearable device is not only a hardware device, but also implements a powerful function through software support, data exchange, and cloud interaction. Generalized wearable intelligent devices include full-featured and large-size devices that can implement complete or partial functions without depending on smartphones, such as smart watches or smart glasses, and devices that focus on only one type of application function and need to work with other devices such as smartphones, such as various smart bands or smart jewelry for monitoring physical signs.

Optionally, the scenario may further include another electronic device 203. The another electronic device 203 may communicate with the electronic device 202. For example, the another electronic device 203 may be configured to display a target image obtained by using the image processing method provided in embodiments of this application. A manner of communication between the electronic device 202 and the another electronic device 203 may be Bluetooth, wireless fidelity (wireless-fidelity, WiFi), or the like.

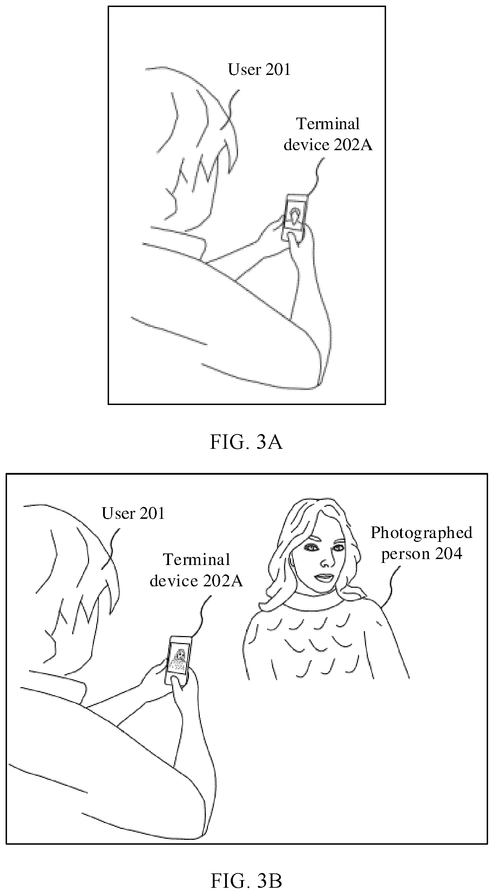

In a possible implementation, embodiments of this application may be applied to a photographing scenario shown in FIG. 3A. As shown in FIG. 3A, the scenario includes a user 201 and a terminal device 202A.

The user 201 may operate the terminal device 202A.

A front-facing photographing apparatus is installed on the terminal device 202A. The terminal device 202A may control, in response to an operation performed by the user 201 on the terminal device 202A, the front-facing photographing apparatus to implement selfie shooting of the user to obtain a selfie image (referred to as a selfie image below) of the user. The terminal device 202A may further process the obtained selfie image by using the image processing method provided in embodiments of this application to obtain a target image.

In another possible implementation, embodiments of this application may be applied to a photographing scenario shown in FIG. 3B. As shown in FIG. 3B, the scenario includes a user 201, a terminal device 202A, and a photographed person 204.

A rear-facing photographing apparatus is installed on the terminal device 202A. The terminal device 202A may control, in response to an operation performed by the user 201 on the terminal device 202A, the rear-facing photographing apparatus to photograph the photographed person 204, to acquire a photographed image (hereinafter referred to as a photographed image) of the photographed person. The terminal device 202A may further process the obtained photographed image by using the image processing method provided in embodiments of this application to obtain a target image.

The solutions provided in embodiments of this application are described below in detail with reference to the accompanying drawings.

According to an aspect, an embodiment of this application provides an electronic device 40, configured to perform the image processing method provided in this application. The electronic device 40 may be the electronic device 202 or the another electronic device 203 shown in FIG. 2.

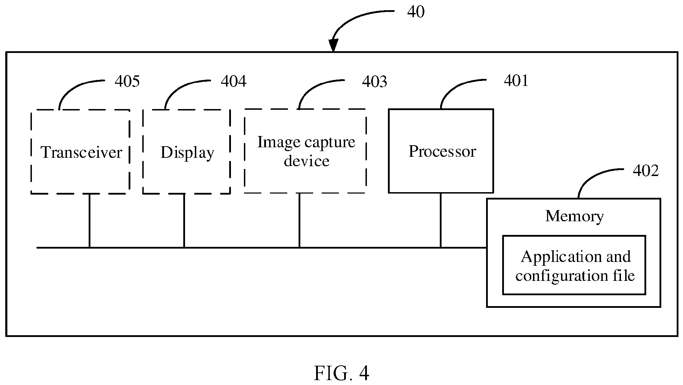

FIG. 4 is a schematic diagram of a structure of the electronic device 40 according to an embodiment of this application. As shown in FIG. 4, the electronic device 40 may include a processor 401 and a memory 402.

The memory 402 may be a volatile memory (volatile memory), such as a random access memory (random-access memory, RAM); or a nonvolatile memory (nonvolatile memory), such as a read-only memory (read-only memory, ROM), a flash memory (flash memory), a hard disk drive (hard disk drive, HDD), or a solid-state drive (solid-state drive, SSD); or a combination of the foregoing types of memories. The memory 402 is configured to store program code, a configuration file, or other content that can implement the method in this application.

The processor 401 is a control center of the electronic device 40. For example, the processor 401 may be a central processing unit (central processing unit, CPU), or an application specific integrated circuit (application specific integrated circuit, ASIC), or may be configured as one or more integrated circuits implementing embodiments of this application, for example, one or more microprocessors (digital singnal processor, DSP), or one or more field programmable gate arrays (field programmable gate array, FPGA).

Optionally, the electronic device 40 may further include an image capture device 403. The image capture device 403 may be configured to capture an image. For example, the image capture device 403 may be a camera or the like.

Optionally, the electronic device 40 may further include a display 404. The display 404 may be configured to display an image. For example, the display 404 may be a display screen.

Optionally, the electronic device 40 may further include a transceiver 405. The transceiver 405 may be configured to communicate with another device. For example, the transceiver 405 may be a communication port or others.

The processor 401 performs the following functions by running or executing a software program and/or a module stored in the memory 402 and invoking data stored in the memory 402:

obtaining a first image and a first explicit lighting parameter, where the first explicit lighting parameter is a lighting parameter configured by a user; processing the first image according to a first relighting algorithm to obtain a second image, where the first relighting algorithm is used to calculate a second pixel value of each pixel in the first image based on the first explicit lighting parameter and a first pixel value of each pixel, and the second image is formed by the second pixel value of each pixel; and determining a target image based on the second image.

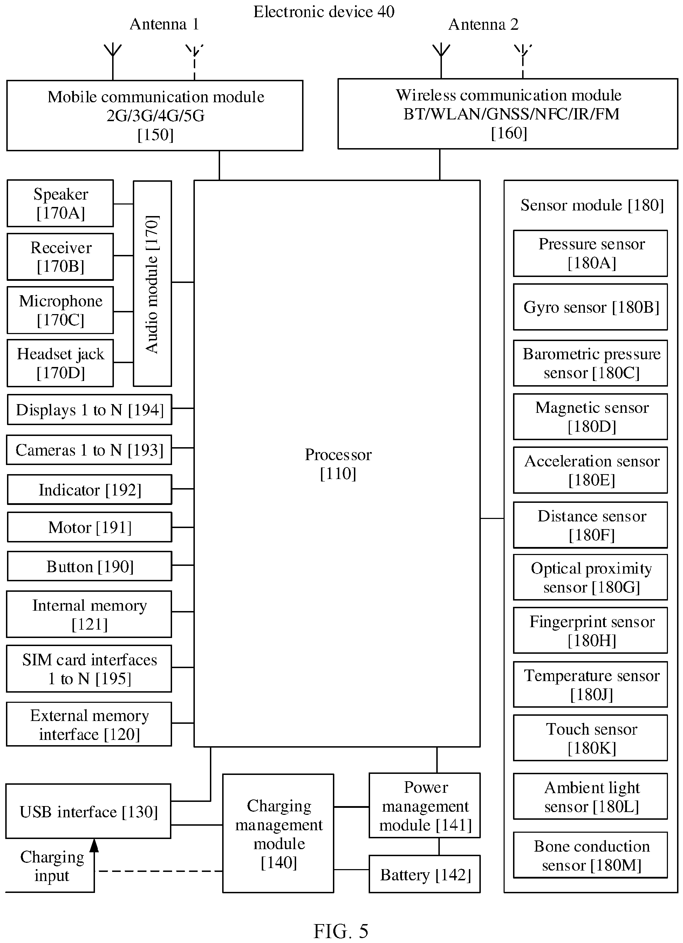

In a possible implementation, the structure of the electronic device may be shown in FIG. 5. The electronic device 40 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent devices, or may be integrated into one or more processors. For example, in embodiments of this application, the processor 110 may obtain a first image and a first explicit lighting parameter, where the first explicit lighting parameter is a lighting parameter configured by a user; process the first image according to a first relighting algorithm to obtain a second image, where the first relighting algorithm is used to calculate a second pixel value of each pixel in the first image based on the first explicit lighting parameter and a first pixel value of each pixel, and the second image is formed by the second pixel value of each pixel; and determine a target image based on the second image.

The controller may be a nerve center and a command center of the electronic device 40. The controller may generate an operation control signal based on an instruction operation code and a time sequence signal, to complete control of instruction fetching and instruction execution.

A memory may be further disposed in the processor 110, and is configured to store instructions and data. In some embodiments, the memory in the processor 110 is a cache. The memory may store instructions or data that has been used or is cyclically used by the processor 110. If the processor 110 needs to use the instructions or the data again, the processor 110 may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The MIPI interface may be configured to connect the processor 110 to a peripheral component such as the display 194 or the camera 193. The MIPI interface includes a camera serial interface (camera serial interface, CSI), a display serial interface (display serial interface, DSI), and the like. In some embodiments, the processor 110 communicates with the camera 193 through the CSI, to implement a photographing function of the electronic device 40. The processor 110 communicates with the display 194 through the DSI, to implement a display function of the electronic device 40.

The GPIO interface may be configured by using software. The GPIO interface may be configured as a control signal, or may be configured as a data signal. In some embodiments, the GPIO interface may be configured to connect the processor 110 to the camera 193, the display 194, the wireless communication module 160, the audio module 170, the sensor module 180, or the like. The GPIO interface may alternatively be configured as an I2C interface, an I2S interface, a UART interface, an MIPI interface, or the like.

The USB interface 130 is an interface that conforms to a USB standard specification, and may be specifically a mini USB interface, a micro USB interface, a USB type-C interface, or the like. The USB interface 130 may be configured to connect to a charger to charge the electronic device 40, or may be configured to transmit data between the electronic device 40 and a peripheral device, or may be configured to connect to a headset, to play audio by using the headset.

The power management module 141 is configured to connect to the battery 142, the charging management module 140, and the processor 110. The power management module 141 receives an input from the battery 142 and/or the charging management module 140, and supplies power to the processor 110, the internal memory 121, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device 40 may be implemented through the antenna 1, the antenna 2, the mobile communication module 150, the wireless communication module 160, the modem processor, the baseband processor, and the like.

The electronic device 40 may implement a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flex light-emitting diode, FLED), a Miniled, a MicroLed, a Micro-oled, a quantum dot light emitting diode (quantum dot light emitting diodes, QLED), or the like. In some embodiments, the electronic device 40 may include one or N displays 194, where N is a positive integer greater than 1.

A series of graphical user interfaces (graphical user interface, GUI) may be displayed on the display 194 of the electronic device 40, and all these GUIs are of a home screen of the electronic device 40. Generally, a size of the display 194 of the electronic device 40 is fixed, and only limited controls can be displayed on the display 194 of the electronic device 40. The control is a GUI element, is a software component, which is included in an application and controls all data processed by the application and interaction operations related to the data. A user may interact with the control through direct manipulation (direct manipulation), to read or edit related information of the application. Generally, controls may include visual interface elements such as an icon, a button, a menu, a tab, a text box, a dialog box, a status bar, a navigation bar, and a widget.

The electronic device 40 can implement a photographing function by using the ISP, the camera 193, the video codec, the GPU, the display 194, the application processor, and the like.

The ISP is configured to process data fed back by the camera 193. For example, during photographing, a shutter is pressed, light is transferred to a camera photosensitive element through a lens, an optical signal is converted into an electrical signal, and the camera photosensitive element transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The light-sensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the electronic device 40 may include one or N cameras 193, where N is a positive integer greater than 1. For example, the camera 193 may include one or at least two cameras such as a primary camera, a long-focus camera, a wide-angle camera, an infrared camera, a depth camera, or a black-and-white camera.

The digital signal processor is configured to process a digital signal, and may process another digital signal in addition to the digital image signal. For example, when the electronic device 40 selects a frequency, the digital signal processor is configured to perform Fourier transformation on frequency energy.

The video codec is configured to compress or decompress a digital video. The electronic device 40 may support one or more video codecs. Therefore, the electronic device 40 may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor, quickly processes input information by referring to a structure of a biological neural network, for example, by referring to a mode of transmission between human brain neurons, and may further continuously perform self-learning. Applications such as intelligent cognition of the electronic device 40 may be implemented through the NPU, for example, image recognition, facial recognition, speech recognition, and text understanding.

The external memory interface 120 may be used to connect to an external storage card, for example, a micro SD card, to extend a storage capability of the electronic device 40. The external storage card communicates with the processor 110 through the external memory interface 120, to implement a data storage function. For example, files such as music and a video are stored in the external storage card.

The internal memory 121 may be configured to store computer-executable program code. The executable program code includes instructions. The processor 110 implements various functional applications and data processing of the electronic device 40 by running the instructions stored in the internal memory 121. For example, in this embodiment, the processor 110 may obtain a first image and a first explicit lighting parameter by executing the instructions stored in the internal memory 121. The internal memory 121 may include a program storage area and a data storage area. The program storage area may store an operating system, an application required by at least one function (for example, a sound playing function or an image playing function), and the like. The data storage area may store data (such as audio data and an address book) and the like that are created during use of the electronic device 40. In addition, the internal memory 121 may include a high-speed random access memory, and may further include a nonvolatile memory, for example, at least one magnetic disk storage device, a flash memory device, or a universal flash storage (universal flash storage, UFS). The processor 110 runs the instructions stored in the internal memory 121 and/or the instructions stored in the memory disposed in the processor, to perform various functional applications and data processing of the electronic device 40.

The electronic device 40 may implement an audio function, for example, music playing and recording, through the audio module 170, the speaker 170A, the receiver 170B, the microphone 170C, the headset jack 170D, the application processor, and the like.

The audio module 170 is configured to convert digital audio information into an analog audio signal output, and is also configured to convert an analog audio input into a digital audio signal. The audio module 170 may be further configured to: code and decode an audio signal. In some embodiments, the audio module 170 may be disposed in the processor 110, or some functional modules of the audio module 170 are disposed in the processor 110.

The speaker 170A, also referred to as a "loudspeaker", is configured to convert an audio electrical signal into a sound signal. The electronic device 40 may listen to music or answer a hands-free call by using the speaker 170A.

The receiver 170B, also referred to as an "earpiece", is configured to convert an electrical audio signal into a sound signal. When a call is answered or speech information is received through the electronic device 40, the receiver 170B may be put close to a human ear to listen to a voice.

The microphone 170C, also referred to as a "mike" or a "mic", is configured to convert a sound signal into an electrical signal. When making a call or sending a voice message, a user may make a sound near the microphone 170C through the mouth of the user, to input a sound signal to the microphone 170C. At least one microphone 170C may be disposed in the electronic device 40. In some other embodiments, two microphones 170C may be disposed in the electronic device 40, to collect a sound signal and implement a noise reduction function. In some other embodiments, three, four, or more microphones 170C may alternatively be disposed in the electronic device 40, to collect a sound signal, implement noise reduction, and identify a sound source, to implement a directional recording function and the like.

The headset jack 170D is configured to connect to a wired headset. The headset jack 170D may be a USB interface 130, or may be a 3.5 mm open mobile terminal platform (open mobile terminal platform, OMTP) standard interface or cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 40 determines pressure intensity based on the change in the capacitance. When a touch operation is performed on the display 194, the electronic device 40 detects intensity of the touch operation through the pressure sensor 180A. The electronic device 40 may also calculate a touch location based on a detection signal of the pressure sensor 180A. In some embodiments, touch operations that are performed in a same touch position but have different touch operation intensity may correspond to different operation instructions. For example, when a touch operation whose touch operation intensity is less than a first pressure threshold is performed on an SMS message application icon, an instruction for viewing an SMS message is performed. When a touch operation whose touch operation intensity is greater than or equal to the first pressure threshold is performed on the SMS message application icon, an instruction for creating a new SMS message is performed.

The gyro sensor 180B may be configured to determine a moving posture of the electronic device 40. In some embodiments, an angular velocity of the electronic device 40 around three axes (namely, axes x, y, and z) may be determined through the gyro sensor 180B. The gyro sensor 180B may be configured to implement image stabilization during photographing. For example, when the shutter is pressed, the gyro sensor 180B detects an angle at which the electronic device 40 jitters, calculates, based on the angle, a distance for which a lens module needs to compensate, and allows the lens to cancel the jitter of the electronic device 40 through reverse motion, to implement image stabilization. The gyro sensor 180B may also be used in a navigation scenario and a somatic game scenario.

The barometric pressure sensor 180C is configured to measure barometric pressure. In some embodiments, the electronic device 40 calculates an altitude through the barometric pressure measured by the barometric pressure sensor 180C, to assist in positioning and navigation.

The magnetic sensor 180D includes a Hall sensor. The electronic device 40 may detect opening and closing of a flip cover by using the magnetic sensor 180D. In some embodiments, when the electronic device 40 is a clamshell phone, the electronic device 40 may detect opening and closing of a flip cover based on the magnetic sensor 180D. Further, a feature such as automatic unlocking of the flip cover is set based on a detected opening or closing state of the leather case or a detected opening or closing state of the flip cover.

The acceleration sensor 180E may detect accelerations in various directions (usually on three axes) of the electronic device 40. When the electronic device 40 is still, a magnitude and a direction of gravity may be detected. The acceleration sensor 180E may be further configured to identify a posture of the terminal, and is applied to an application such as switching between a landscape mode and a portrait mode or a pedometer.

The distance sensor 180F is configured to measure a distance. The electronic device 40 may measure the distance in an infrared manner or a laser manner. In some embodiments, in a photographing scenario, the electronic device 40 may measure a distance by using the distance sensor 180F, to implement quick focusing.

The optical proximity sensor 180G may include, for example, a light emitting diode (LED) and an optical detector, for example, a photodiode. The light emitting diode may be an infrared light emitting diode. The electronic device 40 emits infrared light by using the light-emitting diode. The electronic device 40 detects infrared reflected light from a nearby object by using the photodiode. When sufficient reflected light is detected, the electronic device 40 may determine that there is an object near the electronic device 40. When insufficient reflected light is detected, the electronic device 40 may determine that there is no object near the electronic device 40. The electronic device 40 may detect, by using the optical proximity sensor 180G, that the user holds the electronic device 40 close to an ear for a call, to automatically turn off a screen for power saving. The optical proximity sensor 180G may also be used in a smart cover mode or a pocket mode to automatically perform screen unlocking or locking.

The ambient light sensor 180L is configured to sense ambient light brightness. The electronic device 40 may adaptively adjust brightness of the display 194 based on the sensed ambient light brightness. The ambient light sensor 180L may also be configured to automatically adjust white balance during photographing. The ambient light sensor 180L may also cooperate with the optical proximity sensor 180G to detect whether the electronic device 40 is in a pocket, to avoid an accidental touch.

The fingerprint sensor 180H is configured to collect a fingerprint. The electronic device 40 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the electronic device 40 executes a temperature processing policy through the temperature detected by the temperature sensor 180J. For example, when the temperature reported by the temperature sensor 180J exceeds a threshold, the electronic device 40 lowers performance of a processor near the temperature sensor 180J, to reduce power consumption and implement thermal protection. In some other embodiments, when the temperature is less than another threshold, the electronic device 40 heats the battery 142 to prevent the electronic device 40 from being shut down abnormally due to a low temperature. In some other embodiments, when the temperature is less than still another threshold, the electronic device 40 boosts an output voltage of the battery 142 to avoid abnormal shutdown due to a low temperature.

The touch sensor 180K is also referred to as a "touch component". The touch sensor 180K may be disposed on the display 194, and the touch sensor 180K and the display 194 constitute a touchscreen, which is also referred to as a "touchscreen". The touch sensor 180K is configured to detect a touch operation performed on or near the touch sensor. The touch sensor may transfer the detected touch operation to the application processor to determine a type of the touch event. A visual output related to the touch operation may be provided through the display 194. In some other embodiments, the touch sensor 180K may also be disposed on a surface of the electronic device 40 at a location different from that of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a body pulse to receive a blood pressure beating signal. In some embodiments, the bone conduction sensor 180M may also be disposed in the headset, to obtain a bone conduction headset. The audio module 170 may parse out a speech signal based on the vibration signal obtained by the bone conduction sensor 180M from the vibration bone of the voice part, to implement a speech function. The application processor may obtain heart rate information through parsing based on the blood pressure beat signal obtained by the bone conduction sensor 180M, to implement a heart rate detection function.

The button 190 includes a power button, a volume button, and the like. The button 190 may be a mechanical button, or may be a touch button. The electronic device 40 may receive a key input, and generate a key signal input related to a user setting and function control of the electronic device 40.

The motor 191 may generate a vibration prompt. The motor 191 may be configured to provide an incoming call vibration prompt and a touch vibration feedback. For example, touch operations performed on different applications (for example, photographing and audio playback) may correspond to different vibration feedback effects. The motor 191 may also correspond to different vibration feedback effects for touch operations performed on different areas of the display 194. Different application scenarios (for example, a time reminder, information receiving, an alarm clock, and a game) may also correspond to different vibration feedback effects. A touch vibration feedback effect may be further customized.

The indicator 192 may be an indicator light, and may be configured to indicate a charging status and a power change, or may be configured to indicate a message, a missed call, a notification, and the like.

It may be understood that the interface connection relationship between the modules shown in this embodiment is merely an example for description, and does not constitute a unique limitation on the interface relationship. In some other embodiments of this application, the electronic device 40 may alternatively use an interface connection manner different from that in the foregoing embodiment, or use a combination of a plurality of interface connection manners.

It may be understood that the structure shown in this embodiment should not constitute a specific limitation on the electronic device 40. In some other implementations, the electronic device 40 may include more or fewer components than those shown in the figure; or the electronic device 40 may combine some components into one component, or split a component into a plurality of components.

In addition, an operating system runs on the foregoing components, for example, an iOS operating system developed by Apple, an Android open-source operating system developed by Google, and a Windows operating system developed by Microsoft. An application may be installed and run on the operating system.

The operating system of the electronic device 40 may use a layered architecture, an event-driven architecture, a microkernel architecture, a micro service architecture, or a cloud architecture. In embodiments of this application, an Android system of a layered architecture is used as an example to describe the software structure of the electronic device 40.

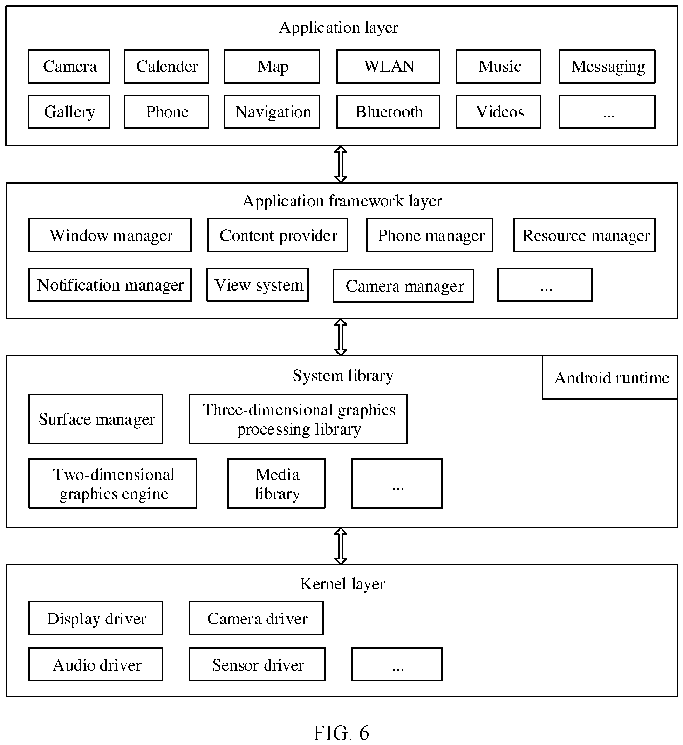

FIG. 6 is a schematic diagram of a software structure of the electronic device 40 according to an embodiment of this application.

In a layered architecture, software is divided into several layers, and each layer has a clear role and task. The layers communicate with each other through a software interface. In some embodiments, the Android system is divided into four layers: an application layer, an application framework layer, an Android runtime (Android runtime) and a system library, and a kernel layer from top to bottom.

The application layer may include a series of application packages. As shown in FIG. 6, the application packages may include applications such as Camera, Gallery, Calendar, Phone, Map, Navigation, WLAN, Bluetooth, Music, Videos, and Messaging. For example, during photographing, the camera application may access a camera interface management service provided by the application framework layer.

The application framework layer provides an application programming interface (application programming interface, API) and a programming framework for an application at the application layer. The application framework layer includes some predefined functions. As shown in FIG. 6, the application framework layer may include a window manager, a content provider, a view system, a phone manager, a resource manager, a notification manager, and the like. For example, in embodiments of this application, during relighting, the application framework layer may provide an image processing-related API for the application layer, and provide a related interface management service for the application layer, to implement an image processing function.

The window manager is configured to manage a window program. The window manager may obtain a size of the display, determine whether there is a status bar, perform screen locking, take a screenshot, and the like.

The content provider is configured to: store and obtain data, and enable the data to be accessed by an application. The data may include a video, an image, audio, calls that are made and received, a browsing history, a bookmark, an address book, and the like.

The view system includes visual controls such as a control for displaying a text and a control for displaying an image. The view system may be configured to construct an application. A display interface may include one or more views. For example, a display interface including a notification icon of Messages may include a text display view and an image display view.

The phone manager is configured to provide a communication function for the electronic device 40, for example, management of a call status (including answering, declining, or the like).

The resource manager provides various resources such as a localized character string, an icon, an image, a layout file, and a video file for an application.

The notification manager enables an application to display notification information in a status bar, and may be configured to convey a notification message. The notification manager may automatically disappear after a short pause without requiring a user interaction. For example, the notification manager is configured to notify download completion, give a message notification, and the like. The notification manager may alternatively be a notification that appears in a top status bar of the system in a form of a graph or a scroll bar text, for example, a notification of an application that is run on a background, or may be a notification that appears on the screen in a form of a dialog window. For example, text information is prompted in the status bar, an alert sound is played, the terminal vibrates, and the indicator light blinks.

The Android runtime includes a kernel library and a virtual machine. The Android runtime is responsible for scheduling and management of the Android system.

The kernel library includes two parts: a function that needs to be called in Java language and a kernel library of Android.

The application layer and the application framework layer run on the virtual machine. The virtual machine executes java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (Media Libraries), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of commonly used audio and video formats, and static image files. The media library may support a plurality of audio and video encoding formats such as MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

It should be noted that, although this embodiment of this application is described by using the Android system as an example, a basic principle in this embodiment is also applicable to a terminal based on an operating system such as iOS or Windows.

According to another aspect, an embodiment of this application provides an image processing method. The image processing method is described below in detail.

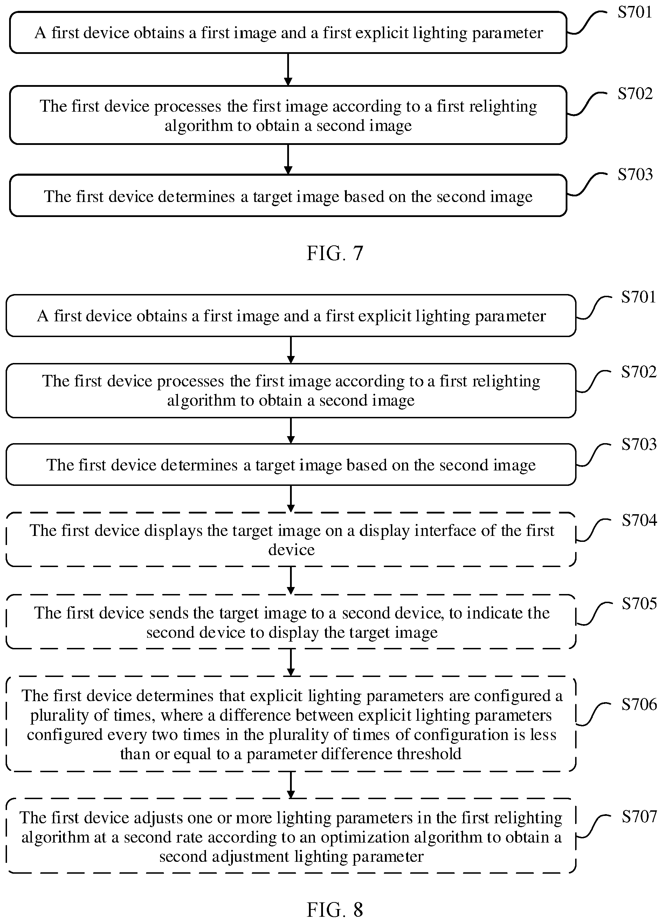

FIG. 7 is a flowchart of an image processing method according to an embodiment of this application. The image processing method is used to perform relighting processing on an image to obtain a target image. An example in which the image processing method is used to adjust relighting of a first image is used to describe in detail how to adjust the relighting of the first image and how to obtain a target image. During relighting of another image, refer to a processing process of the first image. Details are not described again.

Specifically, as shown in FIG. 7, the image processing method may include the following steps.

S701: A first device obtains a first image and a first explicit lighting parameter.

The first device may be any device having an image processing capability. For example, the first device may be the foregoing electronic device.

The first image is an image on which image processing (relighting) needs to be performed by using embodiments of this application.

A representation form of the first image may be configured according to an actual requirement. This is not uniquely limited in embodiments of this application. Specifically, the first image may be a captured original image. Alternatively, the first image may be an image obtained after processing (for example, cropping, splicing, or fusion) is performed on the original image.

A manner of obtaining the first image may be configured according to an actual requirement. This is not uniquely limited in embodiments of this application. Specifically, the first image may be an image captured by the first device. Alternatively, the first image may be an image captured by another device and then sent to the first device. For example, the first image may be an image captured by a second device and then sent to the first device.

Content of the first image may be configured according to an actual requirement. This is not specifically limited in embodiments of this application. For example, the first image may be a landscape image, a face image, or the like.

The explicit lighting parameter may be a lighting parameter configured by a user. Content of the explicit lighting parameter may be configured according to an actual case. This is not specifically limited in embodiments of this application.

In a possible implementation, the first explicit lighting parameter may include one or more of the following: a light source position and a light source intensity.

Specifically, implementation of S701 may include but is not limited to the following Implementation 1 or Implementation 2.

Implementation 1: The first device obtains the first image and the first explicit lighting parameter based on an operation performed on a display interface of the first device.

In a possible implementation, if the first explicit lighting parameter includes the light source position, S701 may be implemented as: displaying the first image on a display interface of the first device; receiving a first operation on the first image; and obtaining the light source position in response to the first operation.

The first operation includes one or more of the following: swiping, tapping (single tapping, double tapping), dragging, and inputting. It may be understood that the first operation may further include other actions, which are not listed one by one herein.

It should be noted that in an implementation process of embodiments of this application, some actions may be processing performed based on some operations of the user. Although steps such as a user operation are described in embodiments, the steps are merely intended to describe the solutions in embodiments of this application more clearly and briefly. A related operation of the user should not constitute a limitation on the solutions provided in embodiments of this application.

It should be noted that, in the possible implementation, the first explicit lighting parameter includes the light source position, that is, the light source intensity is a configured default value.

Example 1: The first device receives a tap operation of the user on the display interface of the first device. The first device displays the first image on the display interface of the first device in response to the tap operation. The user taps "Add a light source icon". The first device receives the tap for adding a light source, and displays, in response to the tap for adding a light source, "Light source icon" at a preset position on the display interface of the first device. Then, the user taps a target position of "Light source icon" in the first image. The first device receives a tap at a target position of a light source icon. In response to the tap at the target position of the light source icon, the first device obtains a target position of a light source, and moves "Light source icon" to the target position of the light source.

Example 2: The first device receives a tap operation of the user on the display interface of the first device. The first device displays the first image on the display interface of the first device in response to the tap operation. The user taps "Add a light source icon". The first device receives the tap for adding a light source, and displays, in response to the tap for adding a light source, "Light source icon" at a preset position on the display interface of the first device. Then, the user drags or swipes "Light source icon" in the first image to a target position. The first device receives the drag or swipe to a target position of a light source icon. In response to the drag or swipe to the target position of the light source icon, the first device obtains a target position of a light source, and moves "Light source icon" to the target position of the light source.

Example 3: The first device receives a tap operation of the user on the display interface of the first device. The first device displays the first image on the display interface of the first device in response to the tap operation. The user taps "Add a light source icon". The first device receives the tap for adding a light source, and displays, in response to the tap for adding a light source, "Light source icon" at a preset position on the display interface of the first device. Then, the user inputs a target position (for example, position coordinates or a position number) of "Light source icon" in the first image. The first device receives an input at a target position of a light source icon. In response to the input at the target position of the light source icon, the first device obtains a target position of a light source, and moves "Light source icon" to the target position of the light source.

In another possible implementation, if the first explicit lighting parameter includes the light source intensity, S701 may be implemented as: displaying the first image on a display interface of the first device; receiving a second operation on the first image; and obtaining the light source position in response to the second operation.

The second operation includes one or more of the following: swiping, tapping, dragging, and inputting.

It should be noted that, in the possible implementation, the first explicit lighting parameter includes the light source intensity, that is, the light source position is a configured default value.

Example A: The first device receives a tap operation of the user on the display interface of the first device. The first device displays the first image on the display interface of the first device in response to the tap operation. The user taps "Add a light source icon". The first device receives the tap for adding a light source, displays, in response to the tap for adding a light source, "Light source icon" at a preset position on the display interface, and displays "Slide bar" and "Slide icon" that indicate a light source intensity. Then, the user taps or drags "Slide icon" to move to a target position of "Slide bar". The first device receives the target position of "Slide icon" on "Slide bar". The first device obtains a light source intensity in response to the target position of "Slide icon" on "Slide bar".

Example B: The first device receives a tap operation of the user on the display interface of the first device. The first device displays the first image on the display interface of the first device in response to the tap operation. The user taps "Add a light source icon". The first device receives the tap for adding a light source, displays, in response to the tap for adding a light source, "Light source icon" at a preset position on the display interface, and displays "Input box" that indicates the light source intensity. Then, the user inputs a light source intensity value or a light source intensity level in "Input box". The first device receives the inputted light source intensity value or light source intensity level inputted into "Input box". The first device obtains a light source intensity in response to the input.

It should be noted that specific representation forms of "Add a light source icon", "Light source icon", "Slide bar", and "Slide icon" are not specifically limited in embodiments of this application, and may be configured according to an actual requirement. For example, "Add a light source icon" may be configured as the shape of the plus sign, and "Light source icon" may be configured as the shape of the sun. "Slide bar" may be configured to be horizontal, or "Slide bar" may be configured to be vertical. "Slide icon" may be configured as a circle, a rectangle, or the like.

Implementation 2: The first device receives the first image and the first explicit lighting parameter that are sent by the second device.

The second device is a device that communicates with the first device.

In a possible implementation, for example, in a non-selfie scenario, the first device may be a terminal device used by a photographer, and the second device may be a terminal device used by a photographed person.

A manner of communication between the first device and the second device may be configured according to an actual requirement. This is not uniquely limited in embodiments of this application. For example, the first device may communicate with the second device in a manner such as Bluetooth or wireless fidelity (wireless-fidelity, WiFi).

With reference to the foregoing Implementation 1, the second device obtains the first image and the first explicit lighting parameter, and then sends the first image and the first explicit lighting parameter to the first device. Correspondingly, the first device receives the first image and the first explicit lighting parameter that are sent by the second device.

S702: The first device processes the first image according to a first relighting algorithm to obtain a second image.

The first relighting algorithm is used to calculate a second pixel value of each pixel in the first image based on the first explicit lighting parameter and a first pixel value of each pixel, and the second image is formed by the second pixel value of each pixel.

The first relighting algorithm may be configured according to an actual requirement. This is not uniquely limited in embodiments of this application.

In a possible implementation, the first relighting algorithm may include a plurality of differentiable functions. For example, the first relighting algorithm may include a three-dimensional image drawing algorithm and an image modification algorithm.

The three-dimensional image drawing algorithm may include a Lambert+Phong (Lambert+Phong) function or a physically-based rendering (physicallly-based rendering, PBR) function.

The image modification algorithm may include a linear burn blend function or a soft light blend function.

For example, the Lambert+Phong function may be expressed as:

$$L_r = \sum_{lights} K_d IL_c (N \times L) + K_s IL_c (R \times V)^n \qquad \text{(Formula 1)}.$$

$L_r$ represents an output color value of each pixel (a color value of a pixel in embodiments of this application is equivalent to a pixel value of a pixel); $\sum_{lights}$ represents traversing each pixel in an image and calculating the output color value of each pixel in the image; $K_d$ represents a diffusion coefficient; $K_s$ represents a mirror coefficient; $I$ represents an intensity of light; $L_c$ represents a tone of light; $N$ represents a curved surface normal; $L$ represents a light direction; $R$ represents a reflection direction; $V$ represents a view direction; and n represents a cosine power.

For example, the PBR function may be expressed as:

$$L_r = \sum_{lights} \frac{DGF}{4 \times (N \times V)} I L_c \Delta W \qquad \text{(Formula 2)}.$$

where $L_r$ represents the output color value of each pixel; $D$ represents a normal distribution function; $G$ represents a geometric function; $F$ represents a Fresnel equation; $N$ represents the curved surface normal; $V$ represents the view direction; $I$ represents the intensity of light; $L_c$ represents the tone of light; and $\Delta W$ represents a solid angle of incident light.

For example, the linear burn blend function may be expressed as:

$$C_0 = C_u + C_l - 1 \qquad \text{(Formula 3)}.$$

$C_0$ represents a color value of an outputted image; $C_u$ represents a color value of a first inputted image; and $C_l$ represents a color value of a second inputted image.

For example, the soft light blend function may be expressed as:

$$C_0 = ((1 - C_l) \times C_l C_u + C_l (1 - (1 - C_l) \times (1 - C_u))) \times \alpha + C_l \times (1 - \alpha) \qquad \text{(Formula 4)}.$$

$\alpha$ represents a mixing rate. $0 < \alpha < 1$.

Implementation of S702 may include but is not limited to the following Manner 1 or Manner 2.

When the first image does not include a face, the second image may be obtained in Manner 1. When the first image includes one or more faces, the second image may be obtained in Manner 1 or Manner 2.

Manner 1 may be implemented as: The first device calculates a third pixel value of each pixel based on the first explicit lighting parameter according to a three-dimensional image drawing algorithm; and an then calculates the second pixel value of each pixel based on the third pixel value of each pixel and the first pixel value of each pixel according to an image modification algorithm to obtain the second image.

For example, when the three-dimensional image drawing algorithm includes the Lambert+Phong function, and the image modification algorithm includes the linear burn blend function, assuming that the first display parameter includes the light source position and the light source intensity, S702 may be implemented as follows: The first device uses the light source intensity obtained in S701 as the intensity of light $I$; calculates the light direction $L$ based on the light source position obtained in S701 and a position of each pixel; estimates the diffusion coefficient $K_d$ and the mirror coefficient $K_s$ based on the first image; obtains the tone of light $L_c$, the curved surface normal $N$, the reflection direction $R$, the view direction $V$, and the cosine power of light n that are estimated; and then traverses each pixel in the first image, and substitutes $I$, $L$, $K_d$, $K_s$, $L_c$, $N$, $R$, $V$, and n into Formula 1 to calculate the output color value $L_r$ of each pixel as a third color value of each pixel.

Then, a first color value of each pixel in the first image and the third color value of each pixel are substituted into Formula 3, and a second color value obtained after linear burn mixing of each pixel is obtained through calculation, to form the second image.

For example, when the three-dimensional image drawing algorithm includes the PBR function, and the image modification algorithm includes the soft light blend function, assuming that the first display parameter includes the light source position and the light source intensity, S702 may be implemented as follows: The first device uses the light source intensity obtained in S701 as the intensity of light $I$; calculates the solid angle $\Delta W$ of incident light based on the light source position obtained in S701 and a position of each pixel; estimates the tone of light $L_c$ based on the first image; estimates the positive curved surface normal $N$, the normal distribution function $D$, the geometric function $G$, the Fresnel equation $F$, and the view direction $V$; and then traverses each pixel in the first image, and substitutes $I$, $\Delta W$, $L_c$, $N$, $D$, $G$, $F$, and $V$ into Formula 2 to calculate the output color value $L_r$ of each pixel as the third color value of each pixel.

Then, the configured mixing rate $\alpha$ is obtained, a first color value of each pixel in the first image, the third color value of each pixel, and $\alpha$ are substituted into Formula 4, and the second color value obtained after soft light mixing of each pixel is obtained through calculation, to form the second image.

Manner 2 may be implemented as follows: The first device obtains a three-dimensional shape of one or more faces in the first image by using a face reconstruction method or an upper body reconstruction method (for example, a deformable geometric fitting method or a deep learning method); then estimates the curved surface normal $N$ based on the three-dimensional shape of the one or more faces; and then calculates the second image with reference to Manner 1.

S703: The first device determines a target image based on the second image.

Specifically, implementation of S703 may include but is not limited to the following Implementation A or Implementation B.

Implementation A: The first device uses an image outputted according to the first relighting algorithm as the target image.

In Implementation A, the first device uses the image (second image) outputted according to the first relighting algorithm as the target image.

Implementation B: The first device uses an image that has a good lighting effect and that is outputted according to a relighting algorithm as the target image.

The first device pre-trains a discriminator, and the discriminator is configured to calculate a lighting quality value of an image inputted into the discriminator. In Implementation B, the first device inputs the second image obtained in S702 into the discriminator to obtain a lighting quality value of the second image, and then determines whether the lighting quality value of the second image is greater than or equal to a lighting quality threshold.

In a first case, if the lighting quality value of the second image is greater than or equal to the lighting quality threshold, it is determined that the target image is the second image.

In a second case, if the lighting quality value of the second image is less than the lighting quality threshold, one or more lighting parameters in the first relighting algorithm are adjusted at a first rate according to an optimization algorithm to obtain a first adjustment lighting parameter; a lighting parameter in a second relighting algorithm is configured as the first adjustment lighting parameter, and then the first image is processed by using the second relighting algorithm to obtain a third image; and then the third image is inputted into the discriminator to acquire a lighting quality value of the third image; and if the lighting quality value of the third image is greater than or equal to the lighting quality threshold, it is determined that the target image is the third image.

In a third case, if the quality value of the third image is less than the lighting quality threshold, an adjustment rate of the optimization algorithm may be reduced. One or more lighting parameters in the first relighting algorithm are adjusted at a second rate to obtain a second adjustment lighting parameter; a lighting parameter in a second relighting algorithm is configured as the second adjustment lighting parameter, and then the first image is processed by using the second relighting algorithm to obtain a third image; then the third image is inputted into the discriminator to acquire a lighting quality value of the third image; and an image whose lighting quality value is greater than the lighting quality threshold is used as the target image.

Specific content of the optimization algorithm may be configured according to an actual requirement. This is not uniquely limited in embodiments of this application. For example, the optimization algorithm may include a stochastic gradient descent (stochastic gradient descent, SGD) algorithm, an adaptive moment estimation (adaptive moment estimation, ADAM) algorithm, and the like.

A process of adjusting one or more lighting parameters in the first relighting algorithm at a first rate by using an optimization algorithm to obtain a first adjustment lighting parameter is described.

After the lighting quality value of the second image is obtained, a gradient of the lighting quality value of the second image is first calculated according to the optimization algorithm, the gradient is used as a reverse input of the discriminator, and a lighting gradient of the second image is calculated through reverse transfer. The lighting gradient of the second image is used as a reverse input of the relighting algorithm, a gradient of each lighting parameter in the relighting algorithm is calculated through reverse transfer, an adjustment amplitude of each adjustment is determined based on the first rate, and each lighting parameter is adjusted based on the gradient of the lighting parameter and the adjustment amplitude.

When the first rate is larger, the amplitude of adjusting the lighting parameter is larger.

For example, when the optimization algorithm includes the SGD algorithm, a process of adjusting one or more lighting parameters in the first relighting algorithm at a first rate by using an optimization algorithm to obtain a first adjustment lighting parameter may include: after the lighting quality value of the second image is obtained, calculating a gradient of the lighting quality value of the second image first by using the SGD algorithm, using the gradient as a reverse input of the discriminator, and calculating a lighting gradient of the second image through reverse transfer; using the lighting gradient of the second image as a reverse input of the relighting algorithm, calculating a gradient of each lighting parameter in the relighting algorithm through reverse transfer, determining an adjustment amplitude of each adjustment based on the first rate, and then performing determining on the gradient of each lighting parameter; if a gradient of a lighting parameter is greater than 0, decrementing the lighting parameter by one adjustment unit (adjustment amplitude); if a gradient of a lighting parameter is less than 0, incrementing the lighting parameter by one adjustment unit; if a gradient of a lighting parameter is equal to 0, skipping adjusting the lighting parameter; and obtaining the first adjustment lighting parameter through adjustment in sequence.

When the first rate is larger, the amplitude of adjusting the lighting parameter is larger.

It should be noted that, in the second case and the third case, one or more lighting parameters in the relighting algorithm need to be adjusted according to the optimization algorithm. Therefore, in the two cases, the relighting algorithm includes a differentiable function. Because a function forming the relighting algorithm is differentiable, a gradient value of the lighting quality value of the image may be reversely transferred to the relighting algorithm by using a chain method and the optimization algorithm to obtain a gradient value of the lighting parameter, and the lighting parameter is adjusted based on the gradient value of the lighting parameter, so that reverse adjustment of the lighting parameter is implemented.

When the first rate is smaller, an explicit lighting parameter included in the first adjustment lighting parameter adjusted according to the optimization algorithm converges more to the first explicit lighting parameter, and a degree of reflecting an intention of the user is higher.

For example, an optimization rate (which may be, for example, the first rate or the second rate) may satisfy the relationship shown in Table 1.

**Table 1**

| Optimization rate | Convergence | Lighting quality value of an image | Degree of reflecting the intention of the user |
|---|---|---|---|
| Large | Unable to converge | Small | Low |
| Medium | Converge to a global minimum value | Large | Medium |
| Small | Converge to a local minimum value | Medium | High |

When the relighting algorithm is adjusted according to the optimization algorithm, a large optimization rate may make the adjusted lighting parameter unable to converge, a lighting quality value of an obtained image is small, and the degree of reflecting the intention of the user is low. An adjusted lighting parameter obtained by using a medium optimization rate may converge to the global minimum value, a lighting quality value of an obtained image is large, and the degree of reflecting the intention of the user is medium. An adjusted lighting parameter obtained at a small optimization rate may converge more to the local minimum value (an explicit lighting parameter configured by the user), a lighting quality value of an obtained image is medium, and the degree of reflecting the intention of the user is high.

It may be understood that if no image that satisfies a condition is used as the target image (for example, when the optimized lighting parameter cannot converge), prompt information may be outputted to indicate that the target image fails to be generated. Specific content of the prompt information is not limited in embodiments of this application. For example, the prompt information may be a text prompt, a voice prompt, a signal prompt, or the like.

It should be noted that if there is no first display parameter configured by the user, processing is performed based on a default explicit lighting parameter. For example, the relighting algorithm calculates the second pixel value of each pixel based on the default explicit lighting parameter and a value of each pixel in the first image to obtain the second image.

According to the image processing method provided in embodiments of this application, in a relighting process, an explicit lighting parameter configured by a user is first obtained, and then a target image is obtained based on the explicit lighting parameter configured by the user and an original image by using a relighting algorithm. In this way, because the relighting algorithm may obtain a pixel value of a processed image through calculation according to the explicit lighting parameter configured by the user and a pixel value of the original image to form the processed image, and then determine the target image based on the processed image. Clearly, in the relighting process, the lighting parameter needs to be configured by the user. Therefore, an intention of the user can be reflected, so that user experience is improved.

Further, the image processing method provided in embodiments of this application may further include displaying the target image. As shown in FIG. 8, S704 and/or S705 may be specifically included.

S704: The first device displays the target image on the display interface of the first device.

Specifically, the first device displays, on the display interface of the first device, the target image determined in S703.

S705: The first device sends the target image to the second device, to indicate the second device to display the target image.

Specifically, the first device sends the target image determined in S703 to the second device, to indicate the second device to display the target image.

Correspondingly, the second device receives the target image sent by the first device in S705, and displays the received target image on a display interface of the second device.

**EP 4 254 319 A1**

In an example of a non-selfie scenario, it is assumed that the first device is a mobile phone, the second device is a smartwatch, and a Bluetooth connection is established between the mobile phone and the smartwatch. In this case, S705 may be implemented as follows: The mobile phone sends the target image to the smartwatch through the Bluetooth connection between the mobile phone and the smartwatch. The smartwatch receives the target image through Bluetooth, and displays the target on a display interface of the smartwatch.

It may be understood that when the target image is displayed, the target image may be displayed on both the first device and the second device. That is, the first device displays the target image on the display interface of the first device, and sends the target image to the second device. After receiving the target image, the second device also displays the target image on the display interface of the second device.

Further, when the image processing method provided in embodiments of this application is performed, an image in a process of configuring an explicit lighting parameter may be displayed. This may specifically include but is not limited to the following case A to case C.

Case A: If the first explicit lighting parameter includes the light source position, an image obtained after the first image is processed based on the light source position may be displayed.

Specifically, after obtaining the light source position, the first device performs simple processing on the first image (for example, the simple processing modifies only a parameter related to a light source at the position, and the processed image may reflect impact of the light source position on the first image). The first device may display, on the display interface of the first device, the image obtained after the first image is processed based on the light source position, or the first device sends the image obtained after the first image is processed based on the light source position to the second device, to indicate the second device to display the processed image.

It may be understood that, if the light source position continuously changes, as the light source position changes, the first explicit lighting parameter obtained by the first device may include a group of light source positions. Correspondingly, a group of images obtained after the first image is processed based on the group of light source positions may be displayed. The impact of the light source position on lighting of the first image can be learned by comparing the group of images.

Case B: If the first explicit lighting parameter includes the light source intensity, an image obtained after the first image is processed based on the light source position may be displayed.

Specifically, after obtaining the light source intensity, the first device performs simple processing on the first image (for example, the simple processing modifies only a parameter related to the light source intensity, and the processed image may reflect impact of the light source intensity on the first image). The first device may display, on the display interface of the first device, the image obtained after the first image is processed based on the light source intensity, or the first device sends the image obtained after the first image is processed based on the light source intensity to the second device, to indicate the second device to display the processed image.

It may be understood that, if the light source intensity continuously changes, as the light source intensity changes, the first explicit lighting parameter that may be obtained by the first device may include a group of light source intensities. Correspondingly, a group of images obtained after the first image is processed based on the group of light source intensities may be displayed. The impact of the light source intensity on lighting of the first image can be learned by comparing the group of images.

Case C: If the first explicit lighting parameter includes the light source position and the light source intensity, an image obtained after the first image is processed based on the light source position and the light source intensity may be displayed.

Specifically, after obtaining the light source position and the light source intensity, the first device performs simple processing on the first image (for example, the simple processing modifies only parameters related to the light source position and the light source intensity, and the processed image may reflect impact of the light source position and the light source intensity on the first image). The first device may display, on the display interface of the first device, the image obtained after the first image is processed based on the light source position and the light source intensity, or the first device sends the image obtained after the first image is processed based on the light source position and the light source intensity to the second device, to indicate the second device to display the processed image.

Further, according to the image processing method provided in embodiments of this application, when the user repeatedly inputs similar explicit lighting parameters, it indicates that convergence of the optimization algorithm does not satisfy an intention of the user. In this case, a rate of adjusting the lighting parameter by the optimization algorithm may be reduced, so that after a lighting parameter of an image is adjusted according to the optimization algorithm at a reduced rate, the explicit lighting parameter included in the adjusted lighting parameter can converge to the explicit lighting parameter configured by the user, to satisfy the intention of the user.

As shown in FIG. 8, the method may specifically include but is not limited to the following S706 and S707.

S706: The first device determines that explicit lighting parameters are configured a plurality of times, where a difference between explicit lighting parameters configured every two times in the plurality of times of configuration is less than or equal to a parameter difference threshold.

19

The parameter difference threshold may be configured according to an actual requirement. This is not specifically limited in embodiments of this application.

Specifically, S706 may be implemented as follows: The first device may obtain, in the manner in S701, the explicit lighting parameters configured by the user. When obtaining the explicit lighting parameters configured by the user a plurality of times, the first device traverses the explicit lighting parameter configured each time, compares the explicit lighting parameters configured every two times, and may further perform determining to determine that a difference between the explicit lighting parameters configured every two times is less than or equal to the parameter difference threshold.

It may be understood that implementation of S706 may be described as follows: The first device determines that the user configures explicit lighting parameters a plurality of times, where the explicit lighting parameters configured the plurality of times are the same or close.

S707: The first device adjusts one or more lighting parameters in the first relighting algorithm at a second rate according to the optimization algorithm to obtain a second adjustment lighting parameter.

The second rate is less than the first rate.

Specifically, refer to the foregoing process of adjusting one or more lighting parameters in the first relighting algorithm at the first rate according to the optimization algorithm. One or more lighting parameters in the first relighting algorithm are adjusted at the second rate according to the optimization algorithm to obtain the second adjustment lighting parameter.

A training process of the discriminator is described below.

The discriminator is a pre-trained neural network or linear network used to calculate a lighting quality value of an image inputted into the discriminator.

A lighting quality value of an image may include a real value of the image and an aesthetic value of the image. When an image has a higher degree of reality, a real value corresponding to the image is larger. When an image has a higher degree of synthesis, a real value corresponding to the image is smaller. When lighting of an image conforms more to traditional aesthetics (for example, a Rembrandt light distribution or a butterfly light distribution), an aesthetic value corresponding to the image is larger. When lighting of an image conforms less to traditional aesthetics, an aesthetic value corresponding to the image is smaller.

In a possible implementation, the discriminator is configured as a neural network or a linear network with one input and two outputs. In the possible implementation, weights of two output networks are first configured, that is, the lighting quality value is obtained by adding the aesthetic value and the real value based on the weights. Then, the two networks are trained separately. Specifically, in one aspect, a plurality of images and actual real values of the plurality of images are inputted into the discriminator. The discriminator performs discriminant calculation and outputs predicted real values of the plurality of images, and reversely adjusts related parameters of the discriminator based on differences between the actual real values and the predicted real values of the plurality of images, until the predicted real values outputted by the discriminator converge to the predicted real values. In another aspect, a plurality of images and actual aesthetic values of the plurality of images are inputted into the discriminator. The discriminator performs discriminant calculation and outputs predicted aesthetic values of the plurality of images, and reversely adjusts related parameters of the discriminator based on differences between the actual aesthetic values and the predicted aesthetic values of the plurality of images, until the predicted aesthetic values outputted by the discriminator converge to the predicted aesthetic values.

For example, it is assumed that the weights of the two output networks of the configured discriminator are 0.5 and 0.5 respectively, that is, an aesthetic value of an image multiplied by 0.5 and a real value of the image multiplied by 0.5 are added to obtain a lighting quality value of the image. A process of separately training the two networks may be as follows: In one aspect, 100 photographed images are inputted into the discriminator, and an actual real value of each photographed image is configured as 1; and 100 synthesized photos are inputted, and an actual real value of each synthesized photo is configured as 0.2. The discriminator performs discriminant calculation and outputs predicted real values of the plurality of images, and reversely adjusts related parameters of the discriminator based on differences between the actual real values and the predicted real values of the plurality of images, until the predicted real values outputted by the discriminator converge to the predicted real values. In another aspect, 100 images photographed by professional photographers are inputted into the discriminator, and an actual aesthetic value of each photographed image is configured as 1; and 100 images belonging to five photographing levels are inputted, and an actual aesthetic value of each image is set to 0.2, 0.5, or 0.8 according to a level of a photographer. The discriminator outputs predicted aesthetic values of the plurality of images, and reversely adjusts related parameters of the discriminator based on differences between the actual aesthetic values and the predicted aesthetic values of the plurality of images, until the predicted aesthetic values outputted by the discriminator converge to the predicted aesthetic values.

In another possible implementation, the discriminator is configured as a neural network or a linear network with one input and one output. In a possible implementation, a plurality of images and actual lighting quality values of the plurality of images are inputted into the discriminator. The discriminator performs discriminant calculation and outputs predicted lighting quality values of the plurality of images, and reversely adjusts related parameters of the discriminator based on differences between the actual lighting quality values and the predicted lighting quality values of the plurality of images, until the predicted lighting quality values outputted by the discriminator converge to the predicted lighting quality values.

The image processing method provided in embodiments of this application is specifically described below in detail by using a selfie scenario as an example. This scenario includes a mobile phone and a user.

Specifically, the user first taps a "Relighting" control. The mobile phone receives the tap and starts a related application of the image processing method provided in embodiments of this application. The user taps or touches a "Camera" control on the mobile phone. The mobile phone receives the tap or touch operation, starts a camera application, and enters a selfie mode. The user taps a "Photograph" control. The mobile phone receives the tap to complete selfie shooting, obtains a to-be-processed image, and displays the to-be-processed image on a display interface of the mobile phone.

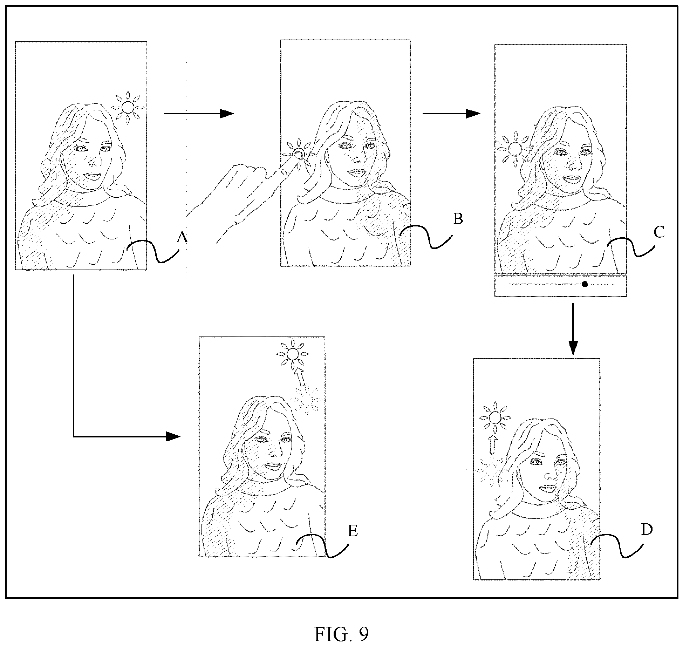

In a first case, the user taps "Add a light source icon". The mobile phone receives the tap of adding a light source, and displays "Light source icon" at a preset position on the display interface in response to the tap of adding a light source, as shown in A of FIG. 9. As shown in B of FIG. 9, the user taps a target position of "Light source icon" in the first image. The mobile phone receives the tap at a target position of a light source icon. The mobile phone obtains a target position of a light source in response to the tap at the target position of the light source icon, and moves "Light source icon" to the target position of the light source. Further, as shown in C of FIG. 9, the mobile phone displays, on the display interface of the mobile phone, "Slide bar" and "Slide icon" that indicate a light source intensity. The user taps or drags "Slide icon" to move to a target position at "Slide bar". The mobile phone receives the target position of "Slide icon" at "Slide bar". In response to the target position, the mobile phone adjusts the light source intensity to a light source intensity corresponding to the position of the slide icon. A diagram of a lighting effect of the to-be-processed image with the light source intensity and the light source position is displayed on the display interface of the mobile phone.

Next, the mobile phone calculates the second pixel value of each pixel by using the relighting algorithm based on the light source intensity and the light source position that are configured by the user and the first pixel value of each pixel in the to-be-processed image, to obtain the target image, as shown in D in FIG. 9.

In a second case, the user taps "Add a light source icon". The mobile phone receives the tap of adding a light source, and displays "Light source icon" at a preset position on the display interface in response to the tap of adding a light source, as shown in A of FIG. 9; and then obtains the target image based on a system default light source position and light source intensity of and according to the relighting algorithm, as shown in E of FIG. 9.

It can be clearly learned by comparing D and E shown in FIG. 9 that the target image obtained in D may reflect an intention of the user.

The solutions provided in embodiments of the present invention are mainly described from a perspective of an implementation principle of performing a relighting process by an electronic device. It may be understood that, to implement the foregoing functions, the electronic device includes a corresponding hardware structure and/or software module for performing each of the functions. A person skilled in the art should easily be aware that, in combination with the units and algorithm steps in the examples described in embodiments disclosed in this specification, the present invention can be implemented by hardware or a combination of hardware and computer software. Whether a function is performed by hardware or hardware driven by computer software depends on a particular application and a design constraint of the technical solutions. A person skilled in the art may use different methods to implement the described functions for each particular application, but it should not be considered that the implementation goes beyond the scope of the present invention.

In embodiments of the present invention, the electronic device or the like may be divided into functional modules based on the foregoing method example. For example, the functional modules may be divided according to the corresponding functions, or two or more functions may be integrated into one processing module. The integrated module may be implemented in a form of hardware, or may be implemented in a form of a software functional module. It should be noted that in embodiments of the present invention, module division is an example, and is merely a logical function division. During actual implementation, another division manner may be used.

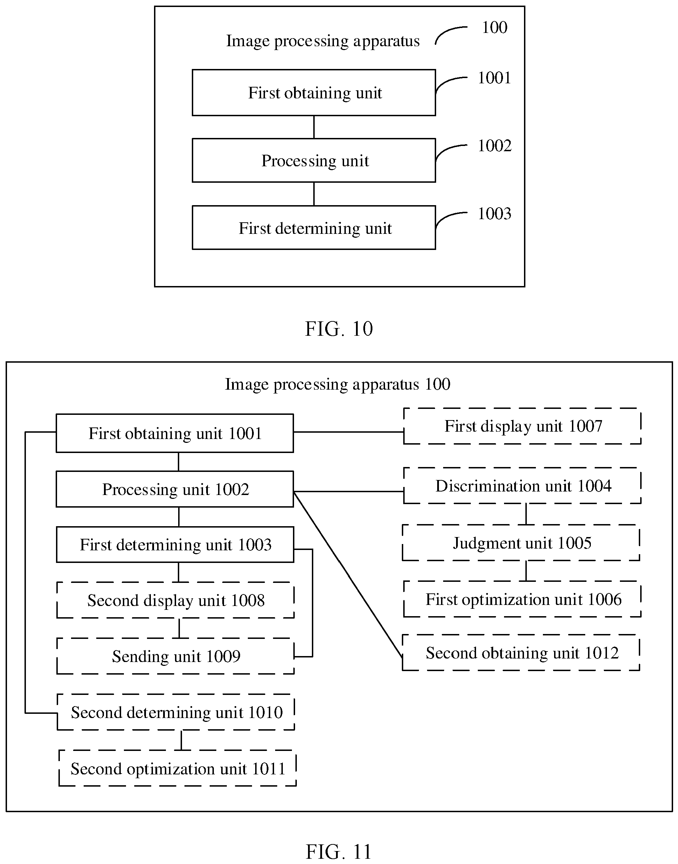

When each functional module is obtained through division based on each corresponding function, FIG. 10 shows an image processing apparatus 100 according to an embodiment of this application. The image processing apparatus 100 is configured to implement a function of the first device in the foregoing embodiments. The image processing apparatus 100 may be a first device. Alternatively, the image processing apparatus 100 may be deployed on the first device. As shown in FIG. 10, the image processing apparatus 100 may include a first obtaining unit 1001, a processing unit 1002, and a first determining unit 1003.

The first obtaining unit 1001 is configured to obtain a first image and a first explicit lighting parameter, where the first explicit lighting parameter is a lighting parameter configured by a user. For example, with reference to FIG. 7 or FIG. 8, the first obtaining unit 1001 is configured to perform S701 in FIG. 7 or FIG. 8.

The processing unit 1002 is configured to process the first image according to a first relighting algorithm to obtain a second image, where the first relighting algorithm is used to calculate a second pixel value of each pixel in the first image based on the first explicit lighting parameter and a first pixel value of each pixel, and the second image is formed by the second pixel value of each pixel. For example, with reference to FIG. 7 or FIG. 8, the processing unit 1002 is configured to perform S702 in FIG. 7 or FIG. 8.

The first determining unit 1003 is configured to determine a target image based on the second image. For example, with reference to FIG. 7 or FIG. 8, the first determining unit 1003 is configured to perform S703 in FIG. 7 or FIG. 8.

In a possible implementation, as shown in FIG. 11, the image processing apparatus 100 may further include a discrimination unit 1004 and a judgment unit 1005. The discrimination unit 1004 may be configured to input the second image into a discriminator to obtain a lighting quality value of the second image, where the discriminator is a pre-trained neural network or linear network used to calculate a lighting quality value of an image inputted into the discriminator. The judgment unit 1005 may be configured to determine whether the lighting quality value of the second image is greater than or equal to a lighting quality threshold. For example, with reference to FIG. 7 or FIG. 8, the discrimination unit 1004 may be configured to perform related steps in S703 shown in FIG. 7 or FIG. 8. For example, with reference to FIG. 7 or FIG. 8, the judgment unit 1005 may be configured to perform related steps in S703 shown in FIG. 7 or FIG. 8. In the possible implementation, the first determining unit 1003 may be specifically configured to: if a judgment result of the judgment unit is that the lighting quality value of the second image is greater than or equal to the lighting quality threshold, determine that the target image is the second image.

In a possible implementation, as shown in FIG. 11, the image processing apparatus 100 may further include a first optimization unit 1006. The first optimization unit 1006 may be configured to: if the judgment result of the judgment unit is that the lighting quality value of the second image is less than the lighting quality threshold, adjust one or more lighting parameters in the first relighting algorithm at a first rate by using an optimization algorithm to obtain a first adjustment lighting parameter. In the possible implementation, the processing unit 1002 may be further configured to process the first image by using a second relighting algorithm to obtain a third image, where a lighting parameter in the second relighting algorithm is the first adjustment lighting parameter. The discrimination unit 1004 may be further configured to input the third image into the discriminator to acquire a lighting quality value of the third image. If the judgment result of the judgment unit 1005 is that the lighting quality value of the third image is greater than or equal to the lighting quality threshold, the first determining unit 1003 may be specifically configured to determine that the target image is the third image. For example, with reference to FIG. 7 or FIG. 8, the first optimization unit 1006 may be configured to perform related steps in S703 shown in FIG. 7 or FIG. 8.

In a possible implementation, the first explicit lighting parameter may include one or more of the following: a light source position and a light source intensity.

In a possible implementation, the first obtaining unit 1001 may be specifically configured to receive the first image and the first explicit lighting parameter that are sent by a second device, where the second device is a device that communicates with the first device.

In a possible implementation, the first explicit lighting parameter includes the light source position, and the first obtaining unit 1001 may be specifically configured to: display the first image on a display interface of the first device; receive a first operation on the first image, where the first operation include one or more of the following: swiping, tapping, dragging, and inputting; and obtain the light source position in response to the first operation.

In a possible implementation, as shown in FIG. 11, the image processing apparatus 100 may further include a first display unit 1007. The first display unit 1007 may be configured to display, on the display interface of the first device, an image obtained after the first image is processed based on the light source position.

In a possible implementation, the first explicit lighting parameter includes the light source intensity, and the first obtaining unit 1001 may be specifically configured to: display the first image on a display interface of the first device; receive a second operation on the first image, where the second operation includes one or more of the following: swiping, tapping, dragging, and inputting; and obtain the light source intensity in response to the second operation.

In a possible implementation, the first display unit 1007 may be further configured to display, on the display interface of the first device, an image obtained after the first image is processed based on the light source intensity.

In a possible implementation, the processing unit 1002 may be specifically configured to: calculate a third pixel value of each pixel based on the first explicit lighting parameter and the first pixel value of each pixel in the first image according to a three-dimensional image drawing algorithm; and calculate the second pixel value of each pixel based on the third pixel value of each pixel and the first pixel value of each pixel according to an image modification algorithm to obtain the second image, where the three-dimensional image drawing algorithm includes a Lambert+Phong function or a physically-based rendering function; and the image modification algorithm includes a linear burn blend function or a soft light blend function.

In a possible implementation, as shown in FIG. 11, the image processing apparatus 100 may further include a second display unit 1008 and/or a sending unit 1009. The second display unit 1008 may be configured to display the target image on the display interface of the first device. The sending unit 1009 may be configured to send the target image to the second device, to indicate the second device to display the target image. For example, with reference to FIG. 8, the first display unit 1007 may be configured to perform S704 and/or S705 in FIG. 7 or FIG. 8.

In a possible implementation, as shown in FIG. 11, the image processing apparatus 100 may further include a second determining unit 1010 and a second optimization unit 1011. The second determining unit 1010 may be configured to determine that the user configures first explicit lighting parameters a plurality of times, where a difference between first explicit lighting parameters configured every two times in the plurality of times of configuration is less than or equal to a parameter difference threshold. The second optimization unit 1011 may be configured to adjust one or more lighting parameters in the first relighting algorithm at a second rate according to the optimization algorithm to obtain a second adjustment lighting parameter, where the second rate is less than the first rate. For example, with reference to FIG. 8, the second determining unit 1010 may be configured to perform S706 in FIG. 8, and the second optimization unit 1011 may be configured to perform S707 in FIG. 8.

In a possible implementation, the image processing apparatus 100 may further include a second obtaining unit 1012. The second obtaining unit 1012 may be configured to obtain a three-dimensional shape of one or more faces in the first image. The processing unit 1002 may be specifically configured to calculate the second pixel value of each pixel according to the first relighting algorithm and based on the first explicit lighting parameter, the three-dimensional shape of the one or more faces, and the first pixel value of each pixel in the first image to obtain the second image.

During actual implementation, the first obtaining unit 1001, the processing unit 1002, the first determining unit 1003, the discrimination unit 1004, the judgment unit 1005, the first optimization unit 1006, the first display unit 1007, the second display unit 1008, the sending unit 1009, the second determining unit 1010, the second optimization unit 1011, and the second obtaining unit 1012 may be implemented by the processor 21 shown in FIG. 2 by invoking the program code in the memory 22, or may be implemented by the processor 21 shown in FIG. 2 by using the communication interface 23. For a specific execution process, refer to descriptions of the image processing method part shown in FIG. 7 or FIG. 8. Details are not described herein again.

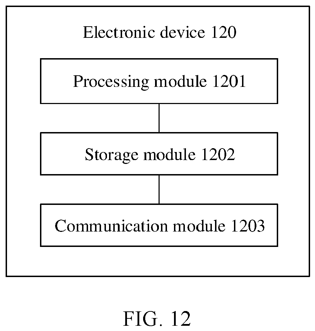

When integrated units are used, FIG. 12 shows an electronic device 120 according to an embodiment of this application. The electronic device 120 is configured to implement functions of the first device in the foregoing method. The electronic device 120 may include at least one processing module 1201, configured to implement a function of a consensus server in embodiments of this application. For example, the processing module 1201 may be configured to perform the processes S702 and S703 in FIG. 7 or FIG. 8. For details, refer to detailed descriptions in the method example. Details are not described herein again.

The electronic device 120 may further include at least one storage module 1202, configured to store program instructions and/or data. The storage module 1202 is coupled to the processing module 1201. The coupling in embodiments of this application is indirect coupling or a communication connection between apparatuses, units, or modules for information exchange between the apparatuses, the units, or the modules, and may be in electrical, mechanical, or other forms. The processing module 1201 may operate in collaboration with the storage module 1202. The processing module 1201 may execute the program instructions stored in the storage module 1202. At least one of the at least one storage module may be included in the processing module.

The electronic device 120 may further include a communication module 1203, configured to communicate with another device through a transmission medium, to determine that the electronic device 120 can communicate with the another device. The communication module 1203 is configured for the device to communicate with another device. For example, the processing module 1201 may use the communication module 1203 to perform the process S701 in FIG. 7 or FIG. 8.

As described above, the image processing apparatus 100 or the electronic device 120 provided in embodiments of this application may be configured to implement functions of the first device in the methods implemented in the foregoing embodiments of this application. For ease of description, only a part related to embodiments of this application is shown. For specific technical details that are not disclosed, refer to embodiments of this application.

Some other embodiments of this application provide an image processing system. The system may include an image processing apparatus. The image processing apparatus may implement functions of the first device in the foregoing embodiments. For example, the image processing apparatus may be the first device described in embodiments of this application.

Some other embodiments of this application provide a chip system. The chip system includes a processor, may further include a memory, and is configured to implement functions of the first device in the embodiment shown in FIG. 7 or FIG. 8. The chip system may include a chip, or include a chip and another discrete device.

Some other embodiments of this application further provide a computer-readable storage medium. The computer-readable storage medium may include a computer program. When the computer program is run on a computer, the computer is enabled to perform the steps performed by the first device in the embodiment shown in FIG. 7 or FIG. 8.

Some other embodiments of this application further provide a computer program product. The computer product includes a computer program. When the computer program product runs on a computer, the computer is enabled to perform the steps performed by the first device in the embodiment shown in FIG. 7 or FIG. 8.

Based on the foregoing descriptions of the implementations, a person skilled in the art may clearly understand that for the purpose of convenient and brief descriptions, division into the foregoing functional modules is merely used as an example for descriptions. During actual application, the foregoing functions can be allocated to different functional modules for implementation based on a requirement, in other words, an inner structure of an apparatus is divided into different functional modules to implement all or a part of the functions described above.

In the several embodiments provided in this application, it should be understood that the disclosed apparatuses and methods may be implemented in other manners. For example, the described apparatus embodiments are merely examples. For example, division into the modules or units is merely logical function division, and may be other division during actual implementation. For example, a plurality of units or components may be combined or may be integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may be one or more physical units, that is, may be located in one place, or may be distributed in a plurality of different places. Some or all of the units may be selected based on actual requirements to achieve the objectives of the solutions of embodiments.

In addition, function units in embodiments of this application may be integrated into one processing unit, each of the units may exist alone physically, or two or more units are integrated into one unit. The integrated unit may be implemented in a form of hardware, or may be implemented in a form of a software function unit.

When the integrated unit is implemented in a form of a software function unit and sold or used as an independent product, the integrated unit may be stored in a readable storage medium. Based on such an understanding, the technical solutions of embodiments of this application essentially, or the part contributing to the current technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of steps of methods in embodiments of this application. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are only specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

**Claims**

1. An image processing method, wherein the method is applied to a first device, and the method comprises:

    obtaining a first image and a first explicit lighting parameter, wherein the first explicit lighting parameter is a lighting parameter configured by a user;
    processing the first image by using a first relighting algorithm to obtain a second image, wherein the first relighting algorithm is used to calculate a second pixel value of each pixel in the first image based on the first explicit lighting parameter and a first pixel value of each pixel, and the second image is formed by the second pixel value of each pixel; and
    determining a target image based on the second image.

2. The method according to claim 1, wherein the method further comprises:

    inputting the second image into a discriminator to obtain a lighting quality value of the second image, wherein the discriminator is a pre-trained neural network or linear network used to calculate a lighting quality value of an image inputted into the discriminator; and
    determining whether the lighting quality value of the second image is greater than or equal to a lighting quality threshold; and
    the determining a target image based on the second image comprises:
    if the lighting quality value of the second image is greater than or equal to the lighting quality threshold, determining that the target image is the second image.

3. The method according to claim 2, wherein the method further comprises:

if the lighting quality value of the second image is less than the lighting quality threshold, adjusting one or more lighting parameters in the first relighting algorithm at a first rate by using an optimization algorithm to obtain a first adjustment lighting parameter;

processing the first image by using a second relighting algorithm to obtain a third image, wherein a lighting parameter in the second relighting algorithm is the first adjustment lighting parameter;

inputting the third image into the discriminator to acquire a lighting quality value of the third image; and

if the lighting quality value of the third image is greater than or equal to the lighting quality threshold, determining that the target image is the third image,

wherein when the first rate is smaller, a second explicit lighting parameter converges more to the first explicit lighting parameter, and the second explicit lighting parameter is an explicit lighting parameter comprised in the first adjustment lighting parameter.

4. The method according to any one of claims 1 to 3, wherein the first explicit lighting parameter comprises one or more of the following:
a light source position and a light source intensity.

5. The method according to any one of claims 1 to 4, wherein the obtaining a first image and a first explicit lighting parameter comprises:
receiving the first image and the first explicit lighting parameter that are sent by a second device, wherein the second device is a device that communicates with the first device.

6. The method according to any one of claims 1 to 4, wherein the first explicit lighting parameter comprises the light source position, and the obtaining a first image and a first explicit lighting parameter comprises:

displaying the first image on a display interface of the first device;
receiving a first operation on the first image, wherein the first operation comprises one or more of the following: swiping, tapping, dragging, and inputting; and
obtaining the light source position in response to the first operation.

7. The method according to claim 6, wherein the method further comprises:
displaying, on the display interface of the first device, an image obtained after the first image is processed based on the light source position.

8. The method according to any one of claims 1 to 4, wherein the first explicit lighting parameter comprises the light source intensity, and the obtaining a first image and a first explicit lighting parameter comprises:

displaying the first image on a display interface of the first device;
receiving a second operation on the first image, wherein the second operation comprises one or more of the following: swiping, tapping, dragging, and inputting; and
obtaining the light source intensity in response to the second operation.

9. The method according to claim 8, wherein the method further comprises:
displaying, on the display interface of the first device, an image obtained after the first image is processed based on the light source intensity.

10. The method according to any one of claims 1 to 9, wherein the processing the first image by using a first relighting algorithm to obtain a second image comprises:

calculating a third pixel value of each pixel based on the first explicit lighting parameter and the first pixel value of each pixel in the first image according to a three-dimensional image drawing algorithm; and
calculating the second pixel value of each pixel based on the third pixel value of each pixel and the first pixel value of each pixel by using an image modification algorithm to obtain the second image,
wherein the three-dimensional image drawing algorithm comprises a Lambert+Phong function or a physically-based rendering function; and
the image modification algorithm comprises a linear burn blend function or a soft light blend function.

11. The method according to any one of claims 1 to 10, wherein the method further comprises:

displaying the target image on the display interface of the first device; and
sending the target image to the second device, to indicate the second device to display the target image.

12. The method according to any one of claims 3 to 11, wherein the method further comprises:

determining that the user configures explicit lighting parameters a plurality of times, wherein a difference between explicit lighting parameters configured every two times in the plurality of times of configuration is less than or equal to a parameter difference threshold; and
adjusting one or more lighting parameters in the first relighting algorithm at a second rate by using the optimization algorithm to obtain a second adjustment lighting parameter, wherein the second rate is less than the first rate.

13. The method according to any one of claims 1 to 12, wherein the first image comprises one or more faces, and the method further comprises:

obtaining a three-dimensional shape of the one or more faces in the first image; and
the processing the first image according to a first relighting algorithm to obtain a second image comprises:
calculating the second pixel value of each pixel according to the first relighting algorithm and based on the first explicit lighting parameter, the three-dimensional shape of the one or more faces, and the first pixel value of each pixel in the first image to obtain the second image.

14. An image processing apparatus, wherein the apparatus is deployed on a first device, and the apparatus comprises:

a first obtaining unit, configured to obtain a first image and a first explicit lighting parameter, wherein the first explicit lighting parameter is a lighting parameter configured by a user;
a processing unit, configured to process the first image according to a first relighting algorithm to obtain a second image, wherein the first relighting algorithm is used to calculate a second pixel value of each pixel in the first image based on the first explicit lighting parameter and a first pixel value of each pixel, and the second image is formed by the second pixel value of each pixel; and
a first determining unit, configured to determine a target image based on the second image.

15. The apparatus according to claim 14, wherein the apparatus further comprises:

a discrimination unit, configured to input the second image into a discriminator to obtain a lighting quality value of the second image, wherein the discriminator is a pre-trained neural network or linear network used to calculate a lighting quality value of an image inputted into the discriminator; and
a judgment unit, configured to determine whether the lighting quality value of the second image is greater than or equal to a lighting quality threshold; and
the first determining unit is specifically configured to: if a judgment result of the judgment unit is that the lighting quality value of the second image is greater than or equal to the lighting quality threshold, determine that the target image is the second image.

16. The apparatus according to claim 15, wherein the apparatus further comprises a first optimization unit;

the first optimization unit is configured to: if the judgment result of the judgment unit is that the lighting quality value of the second image is less than the lighting quality threshold, adjust one or more lighting parameters in the first relighting algorithm at a first rate by using an optimization algorithm to obtain a first adjustment lighting parameter;
the processing unit is further configured to process the first image by using a second relighting algorithm to obtain a third image, wherein a lighting parameter in the second relighting algorithm is the first adjustment lighting parameter;
the discrimination unit is further configured to input the third image into the discriminator to acquire a lighting quality value of the third image; and
the first determining unit is specifically configured to: if the judgment result of the judgment unit is that the lighting quality value of the third image is greater than or equal to the lighting quality threshold, determine that the target image is the third image,
wherein when the first rate is smaller, a second explicit lighting parameter converges more to the first explicit lighting parameter, and the second explicit lighting parameter is an explicit lighting parameter comprised in the first adjustment lighting parameter.

**17.** The apparatus according to any one of claims 14 to 16, wherein the first explicit lighting parameter comprises one or more of the following:
a light source position and a light source intensity.

**18.** The apparatus according to any one of claims 14 to 17, wherein the first obtaining unit is specifically configured to:
receiving the first image and the first explicit lighting parameter that are sent by a second device, wherein the second device is a device that communicates with the first device.

**19.** The apparatus according to any one of claims 14 to 17, wherein the first explicit lighting parameter comprises the light source position, and the first obtaining unit is specifically configured to:

display the first image on a display interface of the first device;
receiving a first operation on the first image, wherein the first operation comprises one or more of the following: swiping, tapping, dragging, and inputting; and
obtain the light source position in response to the first operation.

**20.** The apparatus according to claim 19, wherein the apparatus further comprises:
a first display unit, configured to display, on the display interface of the first device, an image obtained after the first image is processed based on the light source position.

**21.** The apparatus according to any one of claims 14 to 17, wherein the first explicit lighting parameter comprises the light source intensity, and the first obtaining unit is specifically configured to:

display the first image on a display interface of the first device;
receiving a second operation on the first image, wherein the second operation comprises one or more of the following: swiping, tapping, dragging, and inputting; and
obtain the light source intensity in response to the second operation.

**22.** The apparatus according to claim 21, wherein the apparatus further comprises:
a first display unit, configured to display, on the display interface of the first device, an image obtained after the first image is processed based on the light source intensity.

**23.** The apparatus according to any one of claims 14 to 22, wherein the processing unit is specifically configured to:

calculate a third pixel value of each pixel based on the first explicit lighting parameter and the first pixel value of each pixel in the first image according to a three-dimensional image drawing algorithm; and
calculate the second pixel value of each pixel based on the third pixel value of each pixel and the first pixel value of each pixel according to an image modification algorithm to obtain the second image,
wherein the three-dimensional image drawing algorithm comprises a Lambert+Phong function or a physically-based rendering function; and
the image modification algorithm comprises a linear burn blend function or a soft light blend function.

**24.** The apparatus according to any one of claims 14 to 23, wherein the apparatus further comprises a second display unit or a sending unit;

the second display unit is configured to display the target image on the display interface of the first device; and
the sending unit is configured to send the target image to the second device, to indicate the second device to display the target image.

**25.** The apparatus according to any one of claims 16 to 24, wherein the apparatus further comprises:

a second determining unit, configured to determine that the user configures first explicit lighting parameters a plurality of times, wherein a difference between first explicit lighting parameters configured every two times in the plurality of times of configuration is less than or equal to a parameter difference threshold; and
a second optimization unit, configured to adjust one or more lighting parameters in the first relighting algorithm at a second rate according to the optimization algorithm to obtain a second adjustment lighting parameter, wherein the second rate is less than the first rate.

26. The apparatus according to any one of claims 14 to 25, wherein the first image comprises one or more faces, and the apparatus further comprises:

a second obtaining unit, configured to obtain a three-dimensional shape of the one or more faces in the first image; and
the processing unit is specifically configured to calculate the second pixel value of each pixel according to the first relighting algorithm and based on the first explicit lighting parameter, the three-dimensional shape of the one or more faces, and the first pixel value of each pixel in the first image to obtain the second image.

27. An electronic device, wherein the electronic device comprises a processor and a memory, wherein the memory is connected to the processor, the memory is configured to store computer instructions, and when the processor executes the computer instructions, the device performs the image processing method according to any one of claims 1 to 13.

28. A computer-readable storage medium, comprising instructions, wherein when the instructions are run on a computer, the computer is enabled to perform the image processing method according to any one of claims 1 to 13.

29. A computer program product, comprising instructions, wherein when the instructions are run on a computer, the computer is enabled to perform the image processing method according to any one of claims 1 to 13.

FIG. 1

FIG. 2

FIG. 3A

FIG. 3B

40

405    404    403    401

┌─────────┐ ┌─────────┐ ┌──────────────┐ ┌──────────────┐
│Transceiver│ │ Display │ │ Image capture│ │  Processor   │
│         │ │         │ │    device    │ │              │
└─────────┘ └─────────┘ └──────────────┘ └──────────────┘

402

Memory

┌──────────────────────┐
│ Application and       │
│ configuration file    │
└──────────────────────┘

FIG. 4

Electronic device 40

Antenna 1                             Antenna 2

| Mobile communication module<br>2G/3G/4G/5G<br>[150] | Wireless communication module<br>BT/WLAN/GNSS/NFC/IR/FM<br>[160] |
|---|---|

| Speaker [170A] | | |
| Receiver [170B] | Audio module [170] | |
| Microphone [170C] | | |
| Headset jack [170D] | | |

Displays 1 to N [194]

Cameras 1 to N [193]

Indicator [192]

Motor [191]

Button [190]

Internal memory [121]

SIM card interfaces 1 to N [195]

External memory interface [120]

Processor [110]

Sensor module [180]

Pressure sensor [180A]

Gyro sensor [180B]

Barometric pressure sensor [180C]

Magnetic sensor [180D]

Acceleration sensor [180E]

Distance sensor [180F]

Optical proximity sensor [180G]

Fingerprint sensor [180H]

Temperature sensor [180J]

Touch sensor [180K]

Ambient light sensor [180L]

Bone conduction sensor [180M]

USB interface [130]

Charging input

Charging management module [140]

Power management module [141]

Battery [142]

FIG. 5

| Application layer | | | | | |
|---|---|---|---|---|---|
| Camera | Calender | Map | WLAN | Music | Messaging |
| Gallery | Phone | Navigation | Bluetooth | Videos | ... |

| Application framework layer | | | |
|---|---|---|---|
| Window manager | Content provider | Phone manager | Resource manager |
| Notification manager | View system | Camera manager | ... |

**System library**     **Android runtime**

| Surface manager | Three-dimensional graphics processing library |
|---|---|

| Two-dimensional graphics engine | Media library | ... |
|---|---|---|

**Kernel layer**

| Display driver | Camera driver |
|---|---|
| Audio driver | Sensor driver | ... |

FIG. 6

A first device obtains a first image and a first explicit lighting parameter ⟋ S701

The first device processes the first image according to a first relighting algorithm to obtain a second image ⟋ S702

The first device determines a target image based on the second image ⟋ S703

FIG. 7

A first device obtains a first image and a first explicit lighting parameter ⟋ S701

The first device processes the first image according to a first relighting algorithm to obtain a second image ⟋ S702

The first device determines a target image based on the second image ⟋ S703

The first device displays the target image on a display interface of the first device ⟋ S704

The first device sends the target image to a second device, to indicate the second device to display the target image ⟋ S705

The first device determines that explicit lighting parameters are configured a plurality of times, where a difference between explicit lighting parameters configured every two times in the plurality of times of configuration is less than or equal to a parameter difference threshold ⟋ S706

The first device adjusts one or more lighting parameters in the first relighting algorithm at a second rate according to an optimization algorithm to obtain a second adjustment lighting parameter ⟋ S707

FIG. 8

FIG. 9

Image processing apparatus — 100

First obtaining unit — 1001

Processing unit — 1002

First determining unit — 1003

FIG. 10

Image processing apparatus 100

First obtaining unit 1001

First display unit 1007

Processing unit 1002

Discrimination unit 1004

First determining unit 1003

Judgment unit 1005

Second display unit 1008

First optimization unit 1006

Sending unit 1009

Second obtaining unit 1012

Second determining unit 1010

Second optimization unit 1011

FIG. 11

```
┌─────────────────────────────────────────────┐
│          Electronic device 120               │
│   ┌─────────────────────────────────────┐    │
│   │     Processing module 1201          │    │
│   └─────────────────────────────────────┘    │
│                    │                          │
│   ┌─────────────────────────────────────┐    │
│   │      Storage module 1202            │    │
│   └─────────────────────────────────────┘    │
│                    │                          │
│   ┌─────────────────────────────────────┐    │
│   │   Communication module 1203         │    │
│   └─────────────────────────────────────┘    │
└─────────────────────────────────────────────┘
```

FIG. 12

## INTERNATIONAL SEARCH REPORT

| International application No. |
| --- |
| **PCT/CN2020/139883** |

**A. CLASSIFICATION OF SUBJECT MATTER**

G06T 5/00(2006.01)i; G06T 15/50(2011.01)i

According to International Patent Classification (IPC) or to both national classification and IPC

**B. FIELDS SEARCHED**

Minimum documentation searched (classification system followed by classification symbols)

G06T

Documentation searched other than minimum documentation to the extent that such documents are included in the fields searched

Electronic data base consulted during the international search (name of data base and, where practicable, search terms used)

CNKI, CNPAT, WPI, EPODOC, IEEE: 图像, 光照, 光源, 重光照, 亮度, 用户, 配置, 输入, 参数, 选择, 位置, 强度, 像素, 阈值, 三维, image, light , source, re-illuminating, illumination, user, input, parameter, select, position, power, pixel, threshold, three w dimension+, 3D

**C. DOCUMENTS CONSIDERED TO BE RELEVANT**

| Category* | Citation of document, with indication, where appropriate, of the relevant passages | Relevant to claim No. |
| --- | --- | --- |
| X | CN 106548455 A (SAMSUNG ELECTRONICS CO., LTD.) 29 March 2017 (2017-03-29) description paragraphs 0073-0081, 0119-0128, 0156, 0159, figures 2, 10 | 1-29 |
| X | CN 109785423 A (GUANGZHOU HUADUO NETWORK TECHNOLOGY CO., LTD.) 21 May 2019 (2019-05-21) description paragraphs 0053-0095 | 1-29 |
| A | CN 101354784 A (SHANGHAI JIAO TONG UNIVERSITY) 28 January 2009 (2009-01-28) entire document | 1-29 |
| A | CN 105447906 A (ZHEJIANG UNIVERSITY) 30 March 2016 (2016-03-30) entire document | 1-29 |
| A | US 2018260975 A1 (ADOBE SYSTEMS INCORPORATED) 13 September 2018 (2018-09-13) entire document | 1-29 |

☐ Further documents are listed in the continuation of Box C.  ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **13 September 2021** | **28 September 2021** |

| Name and mailing address of the ISA/CN | Authorized officer |
| --- | --- |
| **China National Intellectual Property Administration (ISA/ CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT
### Information on patent family members

International application No.

**PCT/CN2020/139883**

| Patent document cited in search report | | | Publication date (day/month/year) | Patent family member(s) | | | Publication date (day/month/year) |
|---|---|---|---|---|---|---|---|
| CN | 106548455 | A | 29 March 2017 | US | 2017084068 | A1 | 23 March 2017 |
| | | | | EP | 3144899 | B1 | 12 February 2020 |
| | | | | US | 9922452 | B2 | 20 March 2018 |
| | | | | JP | 2017059235 | A | 23 March 2017 |
| | | | | EP | 3144899 | A1 | 22 March 2017 |
| | | | | JP | 6864449 | B2 | 28 April 2021 |
| | | | | KR | 20170033758 | A | 27 March 2017 |
| CN | 109785423 | A | 21 May 2019 | None | | | |
| CN | 101354784 | A | 28 January 2009 | CN | 101354784 | B | 13 October 2010 |
| CN | 105447906 | A | 30 March 2016 | CN | 105447906 | B | 13 March 2018 |
| US | 2018260975 | A1 | 13 September 2018 | US | 10607329 | B2 | 31 March 2020 |

Form PCT/ISA/210 (patent family annex) (January 2015)